# EUROPÄISCHE PATENTSCHRIFT

(11) **EP 2 567 149 B1**
(45) Veröffentlichungstag und Bekanntmachung des Hinweises auf die Patenterteilung: **08.07.2015**
(21) Anmeldenummer: 11714280.2
(22) Anmeldetag: 13.04.2011
(51) Int. Cl.: F21V 25/04, F21K 99/00, H05B 33/08, H05B 41/285, H01R 13/703

(54) **LEUCHTMITTEL ZUM ERSATZ EINER LEUCHTSTOFFRÖHRE**
LAMP FOR REPLACING A FLUORESCENT TUBE
MOYEN D'ÉCLAIRAGE CONÇU POUR REMPLACER UN TUBE FLUORESCENT

(30) Priorität: 10.12.2010 DE 102010054133; 26.08.2010 DE 102010035624; 07.05.2010 DE 102010019875
(43) Veröffentlichungstag der Anmeldung: 13.03.2013
(73) Patentinhaber: Fraunhofer-Gesellschaft zur Förderung der angewandten Forschung e.V., 80686 München (DE)
(72) Erfinder: HEIL, Volker, 46145 Oberhausen (DE); OEZGUEC, Rasit, 46535 Dinslaken (DE); PIONTEK, Udo, 46242 Bottrop (DE)
(74) Vertreter: Cohausz & Florack
(86) Internationale Anmeldenummer: PCT/EP2011/055821
(87) Internationale Veröffentlichungsnummer: WO 2011/138141

(56) Entgegenhaltungen:
- EP-A2- 2 366 948
- WO-A1-03/043141
- WO-A1-2007/015274
- WO-A1-2007/072581
- WO-A1-2009/067074
- WO-A1-2010/069983
- WO-A1-2011/124683
- CN-U- 201 672 283
- GB-A- 2 111 767
- GB-A- 2 319 901
- JP-A- 2010 192 229
- US-A1- 2011 149 563

## Beschreibung

Die Erfindung betrifft ein Leuchtmittel, mit einer Leuchteinheit, wenigstens zwei separaten Kontaktabschnitten und einer elektrischen Verbindung zwischen der Leuchteinheit und den Kontaktabschnitten, wobei jeder Kontaktabschnitt wenigstens einen elektrischen Kontakt zur Verbindung mit einer korrespondierenden Fassung aufweist. Ferner betrifft die Erfindung ein System umfassend ein Leuchtmittel und eine Fassung, wobei das Leuchtmittel zum Betrieb in der Fassung korrespondierend zur Fassung ausgebildet ist.

Leuchtmittel mit separaten Kontaktabschnitten finden derzeit, insbesondere als Gasentladungslampen, insbesondere Leuchtstofflampen, Anwendung. Leuchtstofflampen sind zumeist röhrenförmig ausgebildet, weshalb man auch von Leuchtstoffröhren spricht. Diese Leuchtmittel unterscheiden sich von klassischen Glühbirnen darin, dass zwei separate Kontaktabschnitte vorgesehen sind, mit denen der elektrische Kontakt zwischen dem Leuchtmittel und der Fassung einer Leuchte hergestellt werden kann.

Als Kontaktabschnitt wird der Teil eines Leuchtmittels verstanden, der direkt zur Verbindung mit der Fassung einer Leuchte vorgesehen ist. Insbesondere ist es der Teil eines Leuchtmittels, der korrespondierend zur Fassung ausgebildet ist, so dass das Leuchtmittel in der Fassung aufgenommen werden kann. Bei einer Glühbirne kann beispielsweise das Gewinde insgesamt als Kontaktabschnitt verstanden werden, während bei konventionellen Leuchtstoffröhren die Endflächenabschnitte bzw. Stirnseiten als Kontaktabschnitte angesehen werden können. Ferner werden unter voneinander beabstandeten, d.h. separaten, Kontaktabschnitten insbesondere solche verstanden, zwischen denen eine Leuchteinheit des Leuchtmittels vorgesehen ist, was insbesondere bei röhrenförmigen Leuchtmitteln zutrifft. Alternativ oder zusätzlich können zwei Kontaktabschnitte als separat angesehen werden, wenn zwischen einander benachbarten Bereichen der Kontaktabschnitte Licht nach außen abgegeben wird.

Unter einer Fassung im Sinne der Erfindung wird ein Bauteil der Leuchte verstanden, das der Aufnahme und auswechselbaren Befestigung des mit der Leuchte zu betreibenden Leuchtmittels dient.

Bei Leuchtstoffröhren sind die beiden Kontaktabschnitte häufig an einander gegenüberliegenden Enden des Leuchtmittels vorgesehen. An jedem Kontaktabschnitt sind in der Regel zwei Kontakte zur elektrischen Verbindung des Leuchtmittels mit der Fassung vorgesehen. Die eigentliche Leuchteinheit, welche unter Spannung Licht emittiert, ist über eine elektrische Verbindung mit den beiden Kontaktabschnitten verbunden.

Werden Leuchtmittel mit zwei voneinander beabstandeten Kontaktabschnitten in eine Fassung einer Leuchte eingesetzt, kann das Leuchtmittel bereits über einen der Kontaktabschnitte elektrisch leitend mit der Fassung verbunden sein, während ein weiterer Kontaktabschnitt noch nicht in die Fassung eingesetzt ist. In diesem teilmontierten Zustand kann es zu einer unbeabsichtigten Berührung des noch nicht in die Fassung eingesetzten Kontaktabschnitts durch den Benutzer kommen. Dies ist bei Gasentladungslampen unproblematisch, da der Benutzer aufgrund deren Bauart durch Berührung des noch zugänglichen Kontaktabschnitts keinen Stromschlag erhalten kann.

Anders verhält es sich bei Leuchtmitteln, bei denen bereits im teilmontierten Zustand eine erhöhte Leitfähigkeit zwischen den elektrischen Kontakten der beiden Kontaktabschnitte besteht. Dies kann beispielsweise bei LEDs (Light Emitting Diode - Leuchtdiode) umfassenden Leuchteinheiten der Fall sein. Für derartige Leuchtmittel empfiehlt es sich daher, die Kontakte in möglichst geringem Abstand voneinander vorzusehen, so dass ein Stromschlag eines Bedieners beim unachtsamen Einsetzen des Leuchtmittels in eine Fassung einer Leuchte vermieden wird.

Dies ist allerdings dann nicht möglich, wenn Gasentladungslampen, wie etwa gängige Leuchtstoffröhren, durch andere Leuchtmittel ersetzt werden sollen. In diesem Fall müssen die Leuchtmittel kompatibel zu den bestehenden, zur Aufnahme von Leuchtstoffröhren vorgesehenen Fassungen ausgebildet sein.

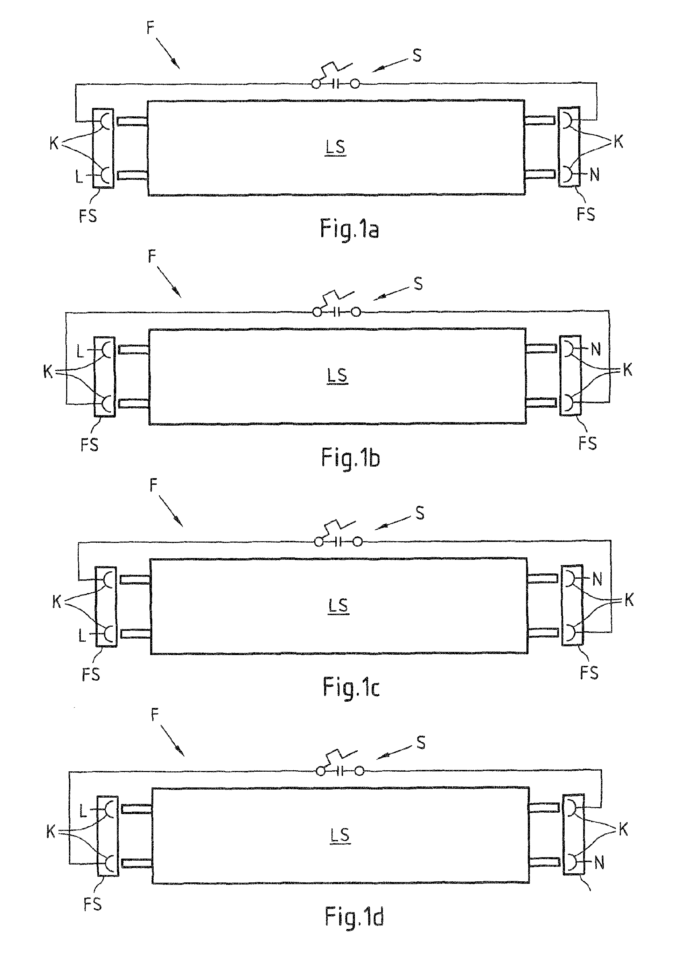

Die Anschlüsse gebräuchlicher Fassungen F zur Verwendung mit Leuchtstoffröhren LS sind schematisch in der Fig. 1 dargestellt. Nach dieser Darstellung werden die Leuchtstoffröhren LS von unten nach oben in die Fassung F eingesetzt. Die Fassung F weist auf beiden Seiten jeweils einen Fassungssockel FS auf, an dem zwei Kontakte K vorgesehen sind, welche jeweils mit zwei Kontakten des Leuchtmittels verbunden werden. In Fig. 1A weist der linke Fassungssockel FS einen unteren Kontakt L auf, an dem die Betriebsspannung anliegt. Die beiden oberen Kontakte K der beiden Fassungssockel FS sind über einen sogenannten Starter S miteinander verbunden. Der untere Kontakt stellt den nicht spannungsführenden Neutralleiter N dar. Es existieren aber auch Fassungen zum Betrieb von Leuchtstoffröhren, wie sie in der Fig. 1B dargestellt sind. Bei diesen sind die unteren Kontakte der beiden Fassungssockel über einen Starter S miteinander verbunden, während die beiden oberen Kontakte den spannungsführenden Kontakt L und den spannungslosen Kontakt N aufweisen. Es kann aber auch vorgesehen sein, dass die spannungsführenden und spannungslosen Kontakte L,N einmal unten und einmal oben an den gegenüberliegenden Fassungssockeln FS vorgesehen sind. Entsprechende Fassungen sind in der Fig. 1C und 1D dargestellt.

Um Probleme zu vermeiden, die sich ergeben, wenn die Fassungen für die Verwendung von Leuchtstoffröhren, beispielsweise mit auf LED basierenden Leuchtmittel betrieben werden, ist bisher eine Umverdrahtung bestehender Fassungen, beziehungsweise Leuchten vorgeschlagen worden. Diese Umverdrahtung kann derart erfolgen, dass die Leuchtmittel über zwei Kontakte ein und desselben Kontaktabschnitts mit Strom versorgt werden. Entsprechende Leuchtmittel werden auch als "Conversion LED Units" bezeichnet. Ein weiterer Kontaktabschnitt ist dann nur noch für das Einsetzen und Halten des Leuchtmittels in der Fassung vorgesehen, ohne dass dort eine elektrische Verbindung zwischen der Fassung und dem Leuchtmittel hergestellt werden müsste.
Nachteilig an solchen Lösungen sind der hohe Aufwand für das Umverdrahten der Fassungen und der Umstand, dass entsprechend umverdrahtete Lampenfassungen nicht mehr mit herkömmlichen Leuchtstoffröhren betrieben werden können.

Ein Leuchtmittel der eingangs genannten Art ist zudem in der WO 2009/067047 A1 benannt, bei dem eine mechanische Schutzvorrichtung vorgesehen ist.

Daher liegt der vorliegenden Erfindung die technische Aufgabe zugrunde, Leuchtmittel und Systeme jeweils der eingangs genannten Art derart auszugestalten und weiterzubilden, dass die Gefahr von mechanischen Beschädigungen der Schutzvorrichtung und die Wahrscheinlichkeit einer übermäßigen Verunsicherung des Benutzers vermindert werden.

Diese technische Aufgabe ist bei einem Leuchtmittel nach dem Anspruch 1 gelöst.
Die Erfindung hat folglich erkannt, dass es zweckmäßiger ist, den Schutz eines Benutzers gegenüber einem elektrischen Stromschlag beim Montieren oder Demontieren eines Leuchtmittels in das Leuchtmittel zu integrieren, statt die korrespondierende Fassung, beziehungsweise die mit dem Leuchtmittel zu verwendende Leuchte, mit einer Schutzvorrichtung auszustatten oder umzuverdrahten. Dabei wird nicht zuletzt eine hohe Flexibilität beim Einsatz der Leuchte erzielt, da die Leuchte so ausgestaltet sein kann, dass sie mit unterschiedlichen Leuchtmitteln zu betreiben ist. Beispielsweise kann die Leuchte wahlweise mit einer Leuchtstofflampe oder mit einem anderen Leuchtmittel betrieben werden. Im letztgenannten Fall ist das Leuchtmittel mit einer Schutzvorrichtung versehen, die ausschließt, dass der Benutzer bei der Montage des Leuchtmittels einen Stromschlag erhält.

Die Gefahr eines Stromschlags kann selbstverständlich auch dadurch ausgeschlossen werden, dass die Fassung bzw. die Leuchte spannungsfrei geschaltet wird. Dies kann durch Betätigen eines dafür vorgesehenen Schalters der Leuchte oder durch Ziehen des Netzsteckers erfolgen. Da dies unter Umständen vor der Montage oder Demontage eines Leuchtmittels vergessen wird, wird diese Option als nicht ausreichend erachtet. Zudem wird nachfolgend der Einfachheit halber davon ausgegangen, dass an der Fassung eine Potentialdifferenz anliegt und so die potentielle Gefahr eines Stromschlags besteht. Das bedeutet auch, dass nachfolgend unter einem montierten Zustand des Leuchtmittels vorzugsweise ein solcher verstanden wird, in dem an der Fassung eine Potentialdifferenz anliegt.

Die Schutzvorrichtung ist derart ausgestaltet, dass sie eine deaktivierte Stellung und eine aktivierte Stellung einnehmen kann. Die deaktivierte Stellung nimmt die Schutzvorrichtung dann ein, wenn sich das Leuchtmittel im montierten Zustand befindet. Im demontierten Zustand des Leuchtmittels oder im demontierten Zustand des entsprechenden Kontaktabschnitts nimmt die Schutzvorrichtung dagegen eine aktivierte Stellung ein. Unter einer aktivierten Stellung wird dabei eine Stellung verstanden, in der die Schutzvorrichtung einen Stromschlag verhindert. In der deaktivierten Stellung der Schutzvorrichtung kann das Leuchtmittel dagegen ohne Funktionseinschränkung zum Emittieren von Licht betrieben werden.

Je nach Bauart der Schutzvorrichtung und je nach Bauart des Leuchtmittels kann die Schutzvorrichtung einem oder mehreren Kontaktabschnitten zugeordnet sein. Aus konstruktiven Gesichtspunkten ist es jedoch von Vorteil, wenn eine Schutzvorrichtung lediglich einem Kontaktabschnitt zugeordnet ist. Dabei kann die Schutzvorrichtung lediglich einem elektrischen Kontakt eines Kontaktabschnittes zugeordnet sein. Es ist aber auch möglich, dass die Schutzvorrichtung mehreren elektrischen Kontakten, insbesondere zwei elektrischen Kontakten, eines Kontaktabschnitts zugeordnet ist. Aus konstruktiver Sicht ist es bevorzugt, wenn eine Schutzvorrichtung allen Kontakten eines Kontaktabschnitts zugeordnet ist.

Das Leuchtmittel kann wie konventionelle Leuchtstoffröhren röhrenförmig ausgebildet sein und an den beiden einander gegenüber liegenden Enden bzw. Stirnseiten jeweils einen Kontaktabschnitt aufweisen. Dabei kann das Leuchtmittel zwischen den Kontaktabschnitten geradlinig oder gekrümmt verlaufen. So kann das Leuchtmittel als Ersatz für Leuchtstoffröhren verwendet werden. Grundsätzlich kommt aber auch jede andere Ausgestaltung des Leuchtmittels in Frage, wenn die Kontaktabschnitte hinreichend von einander beabstandet sind. Dies gilt insbesondere dann, wenn die Anschlussmaße des Leuchtmittels mit konventionellen Leuchtmitteln, wie Leuchtstofflampen, übereinstimmen.

Wenn das Leuchtmittel dazu ausgebildet ist, mit einem bestimmten Kontaktabschnitt zuerst mit einer Fassung einer Leuchte verbunden zu werden, kann bei diesem Kontaktabschnitt auf eine Schutzvorrichtung verzichtet werden. Grundsätzlich kann es jedoch bevorzugt sein, wenn jedem Kontaktabschnitt wenigstens eine Schutzvorrichtung zugeordnet ist. Dann kann ein elektrischer Stromschlag eines Benutzers unabhängig davon vermieden werden, in welcher Ausrichtung oder in welcher Reihenfolge die Kontaktabschnitte in eine Fassung einer Leuchte eingesetzt werden. Auf diese Weise wird letztlich auch der Möglichkeit von Fehlbedienungen Rechnung getragen.

Unter Schutzvorrichtungen im Sinne der Erfindung werden ganz allgemein solche verstanden, die ein Höchstmaß an Fehlbedienungen durch den Benutzer tolerieren. Beispielsweise wird eine schlichte Abdeckung eines Kontaktabschnitts, die elektrische Kontakte eines Kontaktabschnitts überdeckt und vor der Montage des Leuchtmittels in einer Fassung entfernt werden muss, nicht als Schutzvorrichtung im Sinne der Erfindung angesehen. Der Benutzer wird nämlich entsprechende Kappen vor der Montage des Leuchtmittels in eine Fassung entfernen, so dass eine entsprechende Kappe den Benutzer während der Montage des Leuchtmittels, insbesondere im teilmontierten Zustand, nicht mehr gegenüber einem Stromschlag schützen kann.

Schutzvorrichtungen im Sinne der Erfindung sind dagegen vorzugsweise unverlierbar am bzw. im Leuchtmittel angeordnet und werden, vorzugsweise zwangsweise, deaktiviert, wenn ein Kontaktabschnitt des Leuchtmittels in eine korrespondierende Fassung eingesetzt wird und/oder, vorzugsweise zwangsweise, aktiviert, wenn ein entsprechender Kontaktabschnitt aus einer mit dem Leuchtmittel korrespondierenden Fassung entnommen wird. Die Aktivierung einer Schutzvorrichtung erfolgt somit vorzugsweise bereits dann, wenn das Leuchtmittel noch nicht in Gänze aus der Fassung entnommen worden ist, d.h. sich das Leuchtmittel im teilmontierten Zustand befindet. Die Schutzvorrichtung ist dann einem bereits aus der Fassung entnommenen Kontaktabschnitt zugeordnet, während ein weiterer Kontaktabschnitt noch elektrisch leitend mit der Fassung verbunden ist.

Vorzugsweise weist das Leuchtmittel eine Leuchteinheit auf, die wenigstens eine LED, insbesondere aber eine Vielzahl von LEDs, aufweist. Die LEDs können unter anderem in der konventionellen, kuppelförmigen Bauform, als SMD (Surface-Mounted Device), als Hochleistungs-LED (H-LED), als organische Leuchtdiode (OLED) oder als organischer Leuchttransistor ausgestaltet (Organic Light Emitting Transistor - OLET) sein. Dann können bestehende Gasentladungslampen, wie Leuchtstofflampen, insbesondere Leuchtstoffröhren, durch Strom sparende Leuchtmittel der zuvor beschriebenen Art ersetzt werden. Es kommen aber insbesondere auch Leuchteinheiten mit Glühfäden, mit Elektrolumineszenz-Leuchteinrichtungen oder Halogenlampen in Frage.

Beim erfindungsgemäßen Leuchtmittel ist die Schutzvorrichtung elektrisch deaktivierbar ausgebildet. Zusätzlich kann die Schutzvorrichtung derart ausgebildet sein, dass sie mechanisch, magnetisch und/oder thermisch aktiviert werden kann. Derart deaktivierbare und/oder aktivierbare Schutzvorrichtungen haben den Vorteil, dass sie sehr unanfällig gegen Fehlbedienungen konstruiert werden können. Außerdem können die Schutzvorrichtungen ohne weiteres an den jeweiligen Anwendungszweck, das heißt insbesondere an die jeweils korrespondierende Fassung, angepasst werden.

Die Schutzvorrichtung umfasst wenigstens einen elektrisch zu betätigenden Schalter und ein Sensorelement zur Ansteuerung des Schalters. Unter der Kombination eines elektrisch zu betätigenden Schalters und eines Sensorelements werden Relais, insbesondere Halbleiterrelais und/oder Kleinspannungsrelais, verstanden. Dies bietet in der Regel Kostenvorteile. Das Relais kann beispielsweise als 230V-Relais ausgebildet sein. Das Relais kann also in bestimmten Fällen wenigstens als Teil der Schutzvorrichtung angesehen werden.

Aufgrund des geringen Platzbedarfs kann es zweckmäßig sein, wenn ein sogenanntes, aus dem Stand der Technik bekanntes Kleinspannungsrelais Verwendung findet, und zwar bedarfsweise mit wenigstens einer Vorschaltelektronik zum Erzeugen der Kleinspannung für das Kleinspannungsrelais. Die Vorschaltelektronik ist vorzugsweise als Bestandteil bzw. innerhalb des Leuchtmittels vorgesehen. Die Verwendung einer Vorschaltelektronik ist grundsätzlich möglich, auch wenn darauf der Einfachheit halber im Folgenden nicht jeweils separat hingewiesen wird. Die Vorschaltelektronik kann dabei zur Verminderung einer erhöhten Verlustleistungsaufnahme ein stromsenkendes Element, wie wenigstens ein Kondensator, aufweisen, das durch einen Schalter über das Kleinspannungsrelais zugeschaltet wird, wenn die Schutzvorrichtung aus der aktivierten Stellung in die deaktivierte Stellung gelangt. Beim normalen Betrieb des Leuchtmittels wird der Strom bzw. die Spannung auf diese Weise auf einen Wert gesenkt, der zur Haltung bzw. Selbsthaltung des Kleinspannungsrelais ausreicht. Dieser Strom würde ursprünglich aber nicht zum Schalten der Schutzvorrichtung von der aktivierten Stellung in die deaktivierte Stellung ausgereichen. Zum Schalten der Schutzvorrichtung von der aktivierten Stellung in die deaktivierte Stellung, steht jedoch ausreichend Spannung bzw. Strom zur Verfügung, da das stromsenkende Element dann noch nicht aktiv ist. Alternativ zur Verwendung einer Vorschaltelektronik kann das Kleinspannungsrelais auch einer bedarfsweise vorgesehenen Treiberelektronik nachgeschaltet vorgesehen sein. Das Kleinspannungsrelais wird also von der Treiberelektronik angesteuert. Die Treiberelektronik kann insbesondere bei Verwendung wenigstens einer LED aufweisenden Leuchteinheit erforderlich oder jedenfalls zweckmäßig sein. Die Treiberelektronik übernimmt dann die Spannungs- und/oder Stromversorgung der Leuchteinheit. Dies ist bei LEDs von besonderer Bedeutung, da LEDs mit Gleichspannung betrieben werden. Wenn die Treiberelektronik ohnehin erforderlich ist, kann durch die entsprechende Verschaltung des Kleinspannungsrelais auf wenigstens eine Vorschaltelektronik verzichtet werden.

Das den elektrisch zu betätigenden Schalter ansteuernde Sensorelement ist in einem primären Stromkreis vorgesehen, der erst durch das Einsetzen des Leuchtmittels an beiden Kontaktabschnitten in die Fassung geschlossen wird. Der von dem Sensorelement angesteuerte Schalter sitzt in einem sekundären Stromkreis und zwar so, dass er den sekundären Stromkreis beim Einsetzen des Leuchtmittels in die Fassung schließt.

Erst wenn der Schalter nach dem Einsetzen des Leuchtmittels in die Fassung durch das zugeordnete Sensorelement aktiviert wird, schließt sich der Schalter und bedarfsweise auch der sekundäre Stromkreis, in dem sich die eigentliche Leuchteinheit des Leuchtmittels befindet.

Es kann dabei vorgesehen sein, dass der primäre Stromkreis nur teilweise durch das Leuchtmittel gebildet wird und bedarfsweise die Fassung, insbesondere den dort vorgesehenen Starter, mit umfasst. Mit anderen Worten wird der Strom über die Fassung von einem zum gegenüberliegenden Kontaktabschnitt geleitet. Wenn in dieser elektrischen Verbindung der Fassung ein Starter vorgesehen ist, findet eine Leitung des elektrischen Stroms nur bei geschlossenem Starter statt. Der Starter ist vorzugsweise so ausgestaltet, dass er nur dann elektrisch durchgängig wird, wenn an ihm Spannung anliegt. Anstelle eines konventionellen Bimetallstarters kann bedarfsweise auch ein elektronischer Starter, eine Drahtbrücke oder eine Drahtbrücke mit zusätzlicher Sicherung Verwendung finden. Der Einfachheit halber wird jedoch auch im Folgenden lediglich der Begriff Starter verwendet.

Der sekundäre Stromkreis ist vorzugsweise innerhalb des Leuchtmittels zwischen den beiden Kontaktabschnitten desselben vorgesehen. Der sekundäre Stromkreis kann weitere Stromkreise umfassen, die parallel und/oder alternativ, etwa in Abhängigkeit der Stellung entsprechender Schalter, stromdurchflossen werden. Eine sprachliche Unterteilung des sekundären Stromkreises in weitere Stromkreise oder Teilstromkreise ist jedoch in der Regel nicht erforderlich. Wesentlich ist lediglich, dass der primäre Stromkreis nach dem Einsetzen zuerst stromdurchflossen wird und aufgrund der geeigneten Verschaltung nachgeschaltet den Stromfluss im sekundären Stromkreis ermöglicht. Der primäre Stromkreis ist dabei so beschaffen, dass er erst dann geschlossen ist, wenn das Leuchtmittel vollständig mit allen Kontakten in die Fassung der Leuchte eingesetzt ist. Dann besteht für den Monteur des Leuchtmittels keine Gefahr eines Stromschlags mehr. Der primäre Stromkreis kann ähnlich wie bei konventionellen Leuchtstoffröhren ausgebildet sein, bei denen zunächst Strom über den Starter von einem zum anderen Kontaktabschnitt fließt, bis das Gas innerhalb der Leuchtstoffröhre zündet, woraufhin der Strom unter Umgehung über das Gas von einem Kontaktabschnitt zum anderen Kontaktabschnitt fließt.

Im primären Stromkreis ist, für den Fall, dass dieser die beiden Kontaktabschnitte des Leuchtmittels durch eine elektrische Verbindung innerhalb des Leuchtmittels elektrisch verbindet, ein ausreichend hoher elektrischer Widerstand vorgesehen. Auf diese Weise wird die Berührungsspannung in der aktivierten Stellung der Schutzvorrichtung hinreichend begrenzt, um eine Gefährdung des Benutzers bei der Montage des Leuchtmittels auszuschließen. Der hinreichende Widerstand kann alleine durch ein im primären Stromkreis vorgesehenes Sensorelement bereitgestellt werden. Es kann aber auch ein zusätzlicher, vorzugsweise ohmscher, Widerstand geeigneter Größe vorgesehen sein. Um die Gefahr eines Stromschlags sicher zu verhindern, kann zwischen den Kontaktabschnitten in einem beim Einsetzen des Leuchtmittels vorgesehenen Zustand ein Widerstand von wenigstens zwei Megaohm (MΩ) vorgesehen sein. Dies gilt insbesondere für die Netzspannung und die Netzfrequenz, mit denen das Leuchtmittel betrieben werden soll.

Wenn in der Verbindung zwischen den Kontaktabschnitten ein Schalter vorgesehen ist, um beide Kontaktabschnitte in der aktivierten Stellung der Schutzvorrichtung elektrisch voneinander zu trennen, muss der Schalter weit genug geöffnet sein, damit ein Spannungsüberschlag sicher verhindert ist. Alternativ kann anstelle des einen Schalters eine Mehrzahl von Schaltern in Reihe geschaltet werden, um einen Spannungsüberschlag zu verhindern. Besonders bevorzugt ist in diesem Zusammenhang die Bereitstellung einer Spannungsfestigkeit von 3 kV, um eine Gefährdung des Benutzers sicher auszuschließen. Dabei kann die Mehrzahl von Schaltern durch einen oder durch eine Mehrzahl von Sensorelementen geschaltet werden. Es bietet sich wegen des für das Schalten mittels Sensorelementen mindestens erforderlichen Stroms an, die Mehrzahl von Sensorelementen in Reihe anzuordnen. Stellt der Strom bzw. die Verlustleistung keinen limitierenden Faktor dar, kann die Mehrzahl von Sensorelementen aber auch parallel geschaltet werden. Durch die Mehrzahl in Reihe angeordneter Schalter, die beim Umschalten von der aktivierten Stellung in die deaktivierte Stellung der Schutzvorrichtung betätigt werden, wird alternativ oder zusätzlich eine höhere Toleranz gegen ein Versagen eines solchen Schalters erreicht. Einer der Schalter kann beispielsweise dadurch versagen, dass seine Kontakte "kleben" bleiben (Kontaktkleben). Dies kann etwa durch häufiges Schalten der Schalter passieren. Die Kontakte des Schalters können dabei miteinander verschweißen, so dass der Schalter nicht mehr schaltet, sondern dauerhaft in der entsprechenden Stellung verharrt.

Bei einer alternativen Ausgestaltung des Leuchtmittels ist wenigstens eine Messeinrichtung vorgesehen, die den Spannungsabfall zwischen wenigstens zwei Kontakten des Leuchtmittels erfasst. Ferner ist wenigstens ein Schalter zur geeigneten Verschaltung des Leuchtmittels mit der Fassung der Leuchte vorgesehen. Durch das Erfassen der Spannung zwischen den Kontakten wird festgestellt, dass das Leuchtmittel vollständig in die Fassung eingesetzt ist. Der Stromkreis zum Betrieb des Leuchtmittels wird dann durch den Schalter leitend geschaltet. Der sekundäre Stromkreis kann bedarfsweise zuvor zwischen beiden Kontaktabschnitten vollständig unterbrochen sein.

Bedarfsweise ist wenigstens eine mit der Messeinrichtung verbundene Logikschaltung vorgesehen, die feststellt, in welcher Einbaulage sich das Leuchtmittel in Bezug auf die Fassung der Leuchte befindet, d.h. wie die Verschaltung des Leuchtmittels mit der Fassung der Leuchte ausgestaltet ist. Diese kann bei verschiedenen Fassungen oder je nachdem, in welcher Ausrichtung das Leuchtmittel in die Fassung eingesetzt wird, variieren. Die Logikschaltung kann anhand der über den wenigstens einen ermittelten Spannungsabfall bestimmten Einbaulage des Leuchtmittels bezogen auf die Fassung den wenigstens einen Schalter so schalten, wie es für die entsprechende Einbaulage zum Betrieb der Leuchteinheit sinnvoll ist. Es können also nicht versehentlich kritische Betriebszustände auftreten.

Durch das Erfassen der Größe des Spannungsabfalls ist es dem Leuchtmittel bedarfsweise möglich, Fälle, in denen das Leuchtmittel in einer Duoschaltung oder Tandemschaltung in parallel oder seriell geschalteten Fassungen eingebracht ist, von den Fällen zu unterscheiden, bei denen die entsprechende Fassung weder seriell noch parallel mit anderen Fassungen verschaltet ist. Auch dann kann eine geeignete Stellung des wenigstens einen Schalters herbeigeführt werden.

Insbesondere zur Erfassung der Einbaulage und zur entsprechenden Anpassung der Verschaltung der Leuchteinheit mit den Kontakten des Leuchtmittels kann vorgesehen sein, dass die wenigstens eine Messeinrichtung Spannungsabfälle zwischen unterschiedlichen Kontakten des Leuchtmittels ermittelt und eine Logikschaltung anhand der Spannungsabfälle eine Mehrzahl von Schaltern so ansteuert, wie es für die ermittelte Einbaulage vorherbestimmt ist. Insbesondere ist die Messeinrichtung so vorgesehen, dass diese die Spannungsabfälle an vier unterschiedlichen Paaren von Kontakten des Leuchtmittels ermittelt. Die Kontakte eines jeden Paares von Kontakten können sich auf beide Kontaktabschnitte des Leuchtmittels verteilen. Alternativ oder zusätzlich können vorzugsweise vier Schalter vorgesehen sein, so dass in jeder Einbaulage die Leuchteinheit optimal mit den Kontakten des Leuchtmittels verschaltet werden kann. Den Schaltern sind der Einfachheit halber ebenfalls vier unterschiedliche Paare von Kontakten des Leuchtmittels zugeordnet.

Damit ein weiteres Eingreifen des Monteurs nach dem Einsetzen des Leuchtmittels in eine Fassung entbehrlich ist, ist der wenigstens eine Schalter vorzugsweise ein elektrisch zu betätigender Schalter. Die Messeinrichtung kann dann so mit dem Schalter gekoppelt sein, dass dieser in Abhängigkeit von dem ermittelten wenigstens einen Spannungsabfall automatisch in einer vorbestimmten Weise geschaltet wird.

Damit es nicht zu einer ungewollten Störung beim Betrieb des Leuchtmittels kommt, ist die wenigstens eine Schutzvorrichtung vorzugsweise derart ausgebildet, dass die Schutzvorrichtung beim Einsetzen des Leuchtmittels in die Fassung automatisch und/oder zwangsweise deaktiviert wird. Um auch beim Demontieren des Leuchtmittels ein hohes Maß an Sicherheit gegenüber einem elektrischen Stromschlag sicherstellen zu können, ist bei einer weiteren Ausgestaltung des Leuchtmittels eine Schutzvorrichtung mit einem Rückstellmechanismus vorgesehen. Dieser Rückstellmechanismus wird bei der Demontage des Leuchtmittels, das heißt insbesondere bei der Demontage des entsprechenden Kontaktabschnitts, automatisch betätigt.

Diese automatische Betätigung des Rückstellmechanismus überführt die Schutzvorrichtung in eine aktivierte Stellung. Die Gefahr eines elektrischen Stromschlag bei der Demontage des Leuchtmittels aus der Fassung kann somit zuverlässig verhindert werden. Zur Vereinfachung der Schutzvorrichtung und zur Sicherstellung einer hohen Betriebssicherheit kann der Rückstellmechanismus federbelastet sein. Beim Rückstellen der Schutzvorrichtung in eine aktivierte Stellung kann die Schutzvorrichtung oder jedenfalls Teile davon verschoben, verdreht und/oder verschwenkt werden. Entsprechende Rückstellmechanismen lassen sich konstruktiv einfach fertigen und führen selten zu Fehlfunktionen.

Bei einer bevorzugten Ausgestaltung des Leuchtmittels ist die wenigstens eine Schutzvorrichtung als wenigstens ein mechanisch zu betätigender Berührungsschutz ausgebildet. In aktivierter Stellung des Berührungsschutzes verhindert dieser eine Berührung wenigstens eines elektrischen Kontakts durch den Benutzer beim Montieren oder Demontieren des Leuchtmittels. Dagegen gibt der Berührungsschutz in deaktiverter Stellung den wenigstens einen dem Berührungsschutz zugeordneten elektrischen Kontakt des entsprechenden Kontaktabschnitts zur Verbindung mit der Fassung frei. Die Ausgestaltung der Schutzvorrichtung als mechanischer Berührungsschutz stellt eine konstruktiv einfache und kostengünstige Lösung dar. Der dem mechanischen Berührungsschutz zugeordnete elektrische Kontakt kann im teilmontierten Zustand des Leuchtmittels unter Spannung stehen. Denn eine versehentliche Berührung dieses elektrischen Kontakts durch den Benutzer wird durch den Berührungsschutz verhindert, wenn der entsprechende Kontaktabschnitt des jeweiligen elektrischen Kontakts noch nicht in die Fassung eingesetzt und/oder der mechanische Berührungsschutz vom Benutzer noch nicht in die deaktivierte Stellung überführt ist.

Besonders einfach und effektiv ist es, wenn der mechanische Berührungsschutz in der deaktivierten Stellung zusammengedrückt, verdreht, verschoben und/oder verschwenkt ist. Eine der entsprechenden Bewegung entgegen gerichtete Bewegung überführt den mechanischen Berührungsschutz vorzugsweise von der deaktiverten Stellung in die aktivierte Stellung. Der mechanische Berührungsschutz muss daher lediglich eine Bewegung in Hinrichtung und Rückrichtung zulassen und kann daher konstruktiv einfach ausgebildet sein.

Alternativ oder zusätzlich kann der mechanische Berührungsschutz dazu ausgebildet sein, bei der Montage des Leuchtmittels automatisch aus der aktivierten Stellung in die deaktivierte Stellung überführt zu werden. Es bedarf dann keiner separaten Handhabung des mechanischen Berührungsschutzes durch den Benutzer. Die Deaktivierung des mechanischen Berührungsschutzes erfolgt vielmehr unmittelbar durch die zur Montage des Leuchtmittels erforderlichen Montageschritte. Um diese Funktionalität auf einfache Weise sicherzustellen, kann vorgesehen sein, dass der mechanische Berührungsschutz durch Zusammendrücken, Verdrehen und/oder Verschwenken in die deaktivierte Stellung gebracht wird.

Der mechanische Berührungsschutz kann wenigstens eine Öffnung aufweisen, die durch eine Drehbewegung des Berührungsschutzes in Überdeckung mit wenigstens einem elektrischen Kontakt gelangt. Auf diese Weise ist der entsprechende elektrische Kontakt durch die Öffnung problemlos von außen zugänglich beziehungsweise kann durch die Öffnung nach außen dringen, wenn der mechanische Berührungsschutz in der deaktivierten Stellung ist. Andererseits ist eine zufällige Berührung des elektrischen Kontakts ausgeschlossen, wenn sich der mechanische Berührungsschutz in der aktivierten Stellung befindet.

In diesem Zusammenhang bietet es sich weiter an, wenn der mechanische Berührungsschutz zusammengedrückt werden kann, wenn sich die wenigstens eine Öffnung mit dem wenigstens einen elektrischen Kontakt in Überdeckung befindet. So kann der elektrische Kontakt durch die wenigstens eine Öffnung nach außen dringen, ohne dass hierzu komplizierte Verfahrensschritte notwendig wären. Wenn der mechanische Berührungsschutz einem Kontaktabschnitt zugeordnet ist, der mehrere elektrische Kontakte aufweist, kann für jeden elektrischen Kontakt eine separate Öffnung vorgesehen sein.

Alternativ kann der mechanische Berührungsschutz aber auch so ausgebildet sein, dass eine Öffnung von mehreren elektrischen Kontakten eines Kontaktabschnitts durchdrungen wird, wenn der mechanische Berührungsschutz in die aktivierte Stellung überführt wird.

Alternativ oder zusätzlich ist es aus konstruktiver Sicht zweckmäßig, wenn ein Federmittel vorgesehen ist, das den mechanischen Berührungsschutz beim Demontieren des Leuchtmittels in die aktivierte Stellung zurückbewegt. Insbesondere kann das Federmittel infolge der Federkraft eine Drehbewegung, eine Schwenkbewegung und/oder ein Zusammendrücken des mechanischen Berührungsschutzes zu dessen Aktivierung rückgängig machen. Auf diese Weise kann die Deaktivierung des mechanischen Berührungsschutzes automatisch eingeleitet werden, sobald der mechanische Berührungsschutz bei der Demontage des Leuchtmittels die hierfür erforderliche Bewegungsfreiheit verhält. Hierzu ist es besonders zweckmäßig weil konstruktiv einfach, wenn das Federmittel in der deaktivierten Stellung des mechanischen Berührungsschutzes ausgelenkt ist. Die Federkraft des Federmittels wirkt dann zurück in Richtung der aktivierten Stellung des mechanischen Berührungsschutzes.

Alternativ oder zusätzlich zu der zuvor beschriebenen Ausgestaltung der Schutzvorrichtung kann vorgesehen sein, dass die Schutzvorrichtung wenigstens einen mechanisch zu betätigenden Schalter umfasst und dass der mechanisch zu betätigende Schalter im montierten Zustand des Leuchtmittels geschlossen und/oder im demontierten Zustand des entsprechenden Kontaktabschnitts geöffnet ist. Unter einem mechanisch zu betätigenden Schalter wird dabei ein mechanisch zu betätigendes Bauteil verstanden, das nicht der Berührung eines elektrischen Kontakts entgegensteht, sondern die Berührungsspannung an einem entsprechenden Kontakt auf einen unkritischen Wert limitiert. Hinsichtlich einer erhöhten Anwenderfreundlichkeit bietet es sich dabei an, wenn der mechanisch zu betätigende Schalter beim Einsetzen des entsprechenden Kontaktabschnitts in eine korrespondierende Fassung automatisch geschlossen und bei der Entnahme des entsprechenden Kontaktabschnitts aus der korrespondierenden Fassung wieder geöffnet wird. Dies kann beispielsweise erreicht werden, indem der mechanisch zu betätigende Schalter als Taster ausgeführt wird, der nach Beendigung der Betätigung in die Ausgangslage zurückkehrt. Es sind dann keine separaten Verfahrensschritte zur Deaktivierung und/oder zur Aktivierung der entsprechenden Schutzvorrichtung erforderlich.

In einer bevorzugten Ausführung ist der mechanisch zu betätigende Schalter dazu ausgebildet, unmittelbar durch das Zusammenwirken mit der korrespondierenden Fassung geschlossen und/oder geöffnet zu werden. Unter einer korrespondierenden Fassung im Sinne der Erfindung ist dabei eine konventionelle Fassung zu verstehen, die zur Aufnahme des Leuchtmittels geeignet ist. Die Fassung muss dabei kein besonderes Mittel aufweisen, um den mechanisch zu betätigenden Schalter beim Montieren des Leuchtmittels in der entsprechenden Fassung zu betätigen. Anderenfalls wäre ein erheblicher Aufwand erforderlich, um die Fassungen der mit dem entsprechenden Leuchtmittel zu betreibenden Leuchten in geeigneter Weise an die Betätigung des mechanisch zu betätigenden Schalters anzupassen.

Grundsätzlich kann der mechanisch zu betätigende Schalter als Drehschalter und/oder als Druckschalter ausgebildet sein. Druckschalter sind in der Regel konstruktiv einfacher, während Drehschalter eine höhere Betriebssicherheit garantieren.

Um sicherzustellen, dass der mechanisch zu betätigende Druckschalter erst dann geschlossen ist, wenn der wenigstens eine Kontakt des zugeordneten Kontaktabschnitts von dem Benutzer nicht mehr unabsichtlich berührt werden kann, bietet es sich an, wenn der wenigstens eine mechanisch zu betätigende Druckschalter zwischen zwei elektrischen Kontakten des entsprechenden Kontaktabschnitts vorgesehen ist und/oder dass zwei elektrische Kontakte zwischen wenigstens zwei mechanisch zu betätigenden Schaltern vorgesehen sind. Wenn mehrere Druckschalter und/oder mehrere elektrische Kontakte einem Kontaktabschnitt zugeordnet sind, können diese hintereinander in einer Linie angeordnet sein.

Um ein Höchstmaß an Sicherheit bei der Montage und der Demontage des Leuchtmittels sicherzustellen, kann der wenigstens eine mechanisch zu betätigende Druckschalter wenigstens zwei Schaltelemente aufweisen. Auf diese Weise kann die Anzahl der benötigten Druckschalter verringert werden. Bei einer besonders bevorzugten Ausgestaltung sind die wenigstens zwei Schaltelemente aus unterschiedlichen Raumrichtungen zu betätigen. Unter einer Betätigung in diesem Sinne kann vorzugsweise ein Eindrücken des Schaltelements in das Leuchtmittel verstanden werden. Auf diese Weise können die wenigstens zwei Schaltelemente betätigt werden, wenn das Leuchtmittel einen vorbestimmten Abstand in den entsprechenden Raumrichtungen zu der korrespondierenden Fassung einnimmt. Dies ist vorzugsweise im montierten Zustand des Leuchtmittels der Fall. In einer höchst funktionalen und gleichzeitig einfachen Ausgestaltung des mechanisch zu betätigenden Druckschalters ist dieser so ausgestaltet, dass er durch das Betätigen, insbesondere das Eindrücken, der wenigstens zwei Schaltelemente geschlossen wird.

Die Schutzvorrichtung kann alternativ oder zusätzlich auch als ein magnetisch zu betätigender Schalter ausgebildet sein. Dabei ist insbesondere vorgesehen, dass der magnetisch zu betätigende Schalter so ausgebildet ist, dass er beim Einsetzen des Leuchtmittels in die Fassung geöffnet ist. Dies kann in einfacher Weise beispielsweise dadurch realisiert werden, dass an oder in der Fassung der Leuchte wenigstens ein Magnet zum Betätigen des wenigstens einen magnetisch zu betätigenden Schalters vorgesehen wird. Alternativ kann vorgesehen sein, dass zur Inbetriebnahme des Leuchtmittels in der Leuchte ein Magnet montiert werden muss, welcher den magnetisch zu betätigenden Schalter betätigt und erst nach erfolgter Montage des Leuchtmittels in der Fassung oder am Leuchtmittel montiert werden kann. Dazu kann der Magnet beispielsweise an einem das Leuchtmittel, die Fassung und/oder die Leuchte abschnittsweise umgreifenden Klips vorgesehen sein. Der Klips kann zudem so ausgebildet und/oder angeordnet sein, dass er beim Demontieren des Leuchtmittels zwangsweise vom Leuchtmittel, der Fassung und/oder der Leuchte demontiert wird.

Um die Einrichtung zur Betätigung des magnetisch zu betätigenden Schalters in das Leuchtmittel einzubinden, kann ein primärer Stromkreis zur Erzeugung eines Magnetfelds im montierten Zustand des Leuchtmittels vorgesehen sein. Der magnetisch zu betätigende Schalter kann dann vorzugsweise so vorgesehen sein, dass er infolge des Magnetfelds des primären Stromkreises geschlossen wird. Erst wenn der wenigstens eine magnetisch zu betätigende Schalter geschlossen ist, wird der sekundäre Stromkreis stromdurchflossen, in welchem die eigentliche Leuchteinheit vorgesehen ist. Auf diese Weise kann durch sehr kostengünstige und platzsparende Maßnahmen eine hohe Betriebssicherheit erreicht werden.

Die Schutzvorrichtung kann alternativ oder zusätzlich auch als ein thermisch zu betätigender Schalter ausgebildet sein. Der thermisch zu betätigende Schalter ist dabei beim Montieren des Leuchtmittels in die korrespondierende Fassung zunächst geöffnet und kann dann im Falle einer Erwärmung des Schalters geschlossen werden. Auch diese Ausgestaltung der Schutzvorrichtung stellt eine einfache und kostengünstige Lösung dar.

In weiter bevorzugter Ausgestaltung der Schutzvorrichtung ist ein primärer Stromkreis zur Wärmeerzeugung im montierten Zustand des Leuchtmittels vorgesehen. Dazu kann der primäre Stromkreis einen Heizwiderstand aufweisen, der in räumlicher Nähe zum thermisch zu betätigenden Schalter angeordnet ist. Dadurch wird der thermisch zu betätigende Schalter infolge der durch den primären Stromkreis erzeugten Wärme geschlossen. Erst wenn der wenigstens eine thermisch zu betätigende Schalter geschlossen ist, fließt Strom durch einen sekundären Stromkreis, welcher die Leuchteinheit des Leuchtmittels aufweist. Da einzelne, vorzugsweise alle, elektrische(n) Kontakte des Leuchtmittels erst dann in einer Weise (niederohmig) stromdurchflossen sind, dass eine Berührung der Kontakte zu einer Gefährdung des Benutzers führen kann, wenn sie endgültig mit der korrespondierenden Fassung verbunden sind, sind diese elektrischen Kontakte selbst bei teilweise montiertem Leuchtmittel sicher gegenüber einer Berührung durch den Monteur geschützt.

Unabhängig davon, ob der Schalter der Schutzvorrichtung mechanisch, thermisch, magnetisch oder elektrisch zu betätigen ist, kann das Leuchtmittel ein Relais, beispielsweise Halbleiterrelais und/oder Kleinspannungsrelais zur Selbsthaltung eines sekundären Stromkreises aufweisen, solange am primären und/oder sekundären Stromkreis Spannung anliegt, wobei der sekundäre Stromkreis die eigentliche Leuchteinheit des Leuchtmittels aufweist. Das wenigstens eine Relais kann dabei den Schalter der Schutzvorrichtung aufweisen, so dass nicht zwingend ein weiteres Relais zur Selbsthaltung benötigt wird.

So muss der primäre Stromkreis nur einleitend beim Anschalten des Leuchtmittels in Aktion treten. Der Dauerbetrieb wird anschließend ohne weiteres Zutun durch die Selbsthaltung des sekundären Stromkreises sichergestellt. Der sekundäre Stromkreis kann dabei alternativ oder gleichzeitig betriebene Stromkreise umfassen, etwa je nach der Stellung ggf. vorgesehener Schalterelemente. Unabhängig von der Komplexität dieser Stromkreise sind diese dem primären Stromkreis nachgeschaltet und können damit insgesamt als sekundärer Stromkreis bezeichnet werden. Gleiches gilt analog auch für den primären Stromkreis, obwohl dieser aus konstruktiver Sicht vorzugsweise so einfach wie möglich ausgebildet ist. Bei einer bevorzugten Ausgestaltung des Leuchtmittels ist ein Schalter zwischen zwei Kontakten eines Kontaktabschnitts und der Leuchteinheit vorgesehen. Dies erlaubt es, entweder den einen Kontakt oder den anderen Kontakt eines Kontaktabschnitts leitend mit der Leuchteinheit zu verbinden und erhöht die Flexibilität bei der Verwendung des Leuchtmittels.

Das Leuchtmittel ist dabei vorzugsweise so ausgestaltet, dass es, wenn es in der vorgesehen Ausrichtung zur Fassung in diese eingesetzt wird, direkt und sicher zu betreiben ist. Wenn das Leuchtmittel jedoch nicht in der vorgesehenen Ausrichtung zur Fassung in diese eingesetzt wird, etwa weil die Verdrahtung der Fassung anders als erwartet (vgl. Fig. 1A bis 1D) und/oder das Leuchtmittel beim Einsetzen in die Fassung versehentlich falsch gehalten wird, kann dies nach dem Einsetzen des Leuchtmittels in die Fassung durch Umlegen des Schalters korrigiert werden, ohne dass das Leuchtmittel aus der Fassung entnommen und erneut in anderer Ausrichtung zur Fassung in diese eingesetzt werden muss.

Alternativ oder zusätzlich kann auf diese Weise verhindert werden, dass es in einer unerwünschten Einbaulage des Leuchtmittels in Bezug zur Fassung zu einem Kurzschluss kommt. Es kann dabei vorgesehen sein, dass das Leuchtmittel in beiden Schalterstellungen funktioniert, wobei jedoch eine Schalterstellung zu einem bevorzugten Betrieb des Leuchtmittels führt. Es kann aber auch vorgesehen sein, dass das Leuchtmittel in Abhängigkeit von der Einbaulage desselben in der Fassung kein Licht abstrahlt. Dies ist dann das Signal an den Monteur, den Schalter zu betätigen, was zu einer funktionstüchtigen Schaltung und dem Abstrahlen von Licht durch die Leuchteinheit führt. Der Schalter kann vorzugsweise manuell, elektrisch, magnetisch oder thermisch zu betätigen sein.

Alternativ oder zusätzlich kann zwischen zwei Kontakten eines Kontaktabschnitts und der Leuchteinheit eine Umpoleinrichtung zum Umpolen der Kontakte des einen Kontaktabschnitts in Bezug auf die Leuchteinheit vorgesehen sein. Die Umpoleinrichtung erlaubt es, dass die beiden Kontakte des einen Kontaktabschnitts in der Schaltung des Leuchtmittels ihre Plätze tauschen. Entsprechende Einrichtungen sind an sich aus dem Stand der Technik bekannt und können beispielsweise als sogenannte Kreuzschaltungen ausgebildet sein, die manuell oder automatisch betätigt werden können. Beispielsweise können die Umpoleinrichtungen zwei Schalter oder einen zweipolig schaltenden Schalter aufweisen. Die Schalter können vorzugsweise mechanisch oder elektrisch angesteuert sein, etwa durch einen Schalter oder ein Relais, insbesondere Halbleiterrelais und/oder Kleinspannungsrelais. Auf diese Weise kann eine unerwünschte Einbaulage des Leuchtmittels in Bezug zur Fassung durch einen Einbau des Leuchtmittels in einer nicht bevorzugten Orientierung in Bezug zur jeweiligen Fassung korrigiert werden. Eine unerwünschte Einbaulage kann sich dadurch auszeichnen, dass die Leuchteinheit trotz Anliegen der Netzspannung nicht leuchtet.

Bevorzugt kann es in diesem Zusammenhang sein, wenn ein Sensorelement vorgesehen ist, das die Umpoleinrichtung bei einer vorbestimmten nicht bevorzugten Verschaltung des Leuchtmittels mit der Fassung automatisch zur Umpolung der Kontakte des einen Kontaktabschnitts in Bezug auf die Leuchteinheit ansteuert. Die Kontakte werden in Bezug auf die Schaltung des Leuchtmittels also automatisch gegeneinander vertauscht, wenn ein vorbestimmter Betriebsfall, d.h. insbesondere eine vorbestimmte Einbaulage des Leuchtmittels in Bezug auf die Fassung, vorliegt. In diesem Zusammenhang wird grundsätzlich unter der Einbaulage nicht lediglich die Orientierung des Leuchtmittels, sondern vielmehr das Verhältnis der Kontakte von Leuchtmittel und Fassung verstanden. Es kann also auch bei gleicher Orientierung des Leuchtmittels aber unterschiedlicher Verdrahtung der Fassung zu unterschiedlichen Einbaulagen kommen (vgl. Fig. 1A bis 1D).

Es ist jedoch ggf. einfacher und ausreichend, wenn ein von außen zugänglicher, mechanisch zu betätigender Schalter zum Betätigen der Umpoleinrichtung vorgesehen ist. Der Monteur erhält dabei vorzugsweise eine Information über die tatsächliche Einbaulage bzw. in allgemeiner Form darüber, ob ein Betätigen der Umpoleinrichtung angezeigt ist. Im einfachsten Fall kann dies dadurch geschehen, dass das Leuchtmittel nach dem Einbau in die Fassung nicht leuchtet. Dies kann dann beispielsweise durch ein händisches Betätigen des Schalters behoben werden. Dabei ist vorzugsweise zum händischen Betätigen des Schalters ein Schalter oder dergleichen vorgesehen, der, ohne das Leuchtmittel erneut ausbauen zu müssen, von außen betätigt werden kann.

Es kann des höheren Komforts wegen und um eine Verunsicherung ungeschulter Monteure zu verhindern aber auch vorgesehen sein, dass ein optischer und/oder akustischer Signalgeber anzeigt, ob bei der entsprechenden Einbaulage des Leuchtmittels in Bezug auf die Fassung die Umpoleinrichtung aktiviert werden sollte. Dies kann dadurch erreicht werden, dass der Signalgeber in der Schaltung des Leuchtmittels so vorgesehen ist, dass der Signalgeber aktiv ist, wenn sich das Leuchtmittel in einer vorbestimmten Einbaulage befindet. Befindet sich das Leuchtmittel in einer anderen Einbaulage, die sich vorzugsweise dadurch von der zuvor beschriebenen Einbaulage unterscheidet, dass die Kontakte des einen Kontaktabschnitts über eine Umpoleinrichtung gegeneinander vertauscht sind, ist der Signalgeber inaktiv. Inaktiv kann hier spannungsfrei und aktiv spannungsbeaufschlagt sein.

Der Signalgeber kann auch mit einem Sensorelement und einer Schalteinheit gekoppelt sein. Die Kopplung ist dabei derart, dass das Sensorelement in einem vorbestimmten Betriebszustand und/oder einer vorbestimmten Einbaulage die Schalteinheit zur Aktivierung des Signalgebers ansteuert. Der Signalgeber ist dann aktiv und zeigt vorzugsweise an, dass die Umpoleinrichtung zum Umpolen der entsprechenden Kontakte aktiviert werden sollte. Durch die Aktivierung der Schalteinheit kann dann nicht nur der Signalgeber aktiviert, sondern auch ein ungünstiger Betriebszustand vermieden werden. Dies ist beispielsweise dann von Vorteil, wenn im ungünstigen Betriebszustand ein zu großer Teil des Stroms an der Leuchteinheit vorbei, insbesondere von Kontaktabschnitt zu Kontaktabschnitt, fließt. Dies hätte ohne die Schalteinheit beispielsweise einen erhöhten elektrischen Verlust, eine zu hohe Gesamtstromaufnahme und/oder die Gefahr eines Kurzschlusses zur Folge.

Ist eine mit dem Signalgeber gekoppelte Schalteinheit vorgesehen, ist diese vorzugsweise rücksetzbar ausgebildet und/oder mit einem Rücksetzer gekoppelt. Dies ermöglicht das Zurücksetzen der Schalteinheit in den Ausgangszustand. Wenn nach der Aktivierung des Signalgebers die Umpoleinheit betätigt, das Leuchtmittel gegenüber der Fassung gedreht oder auf eine andere geeignete Art auf das Signal des Signalgebers reagiert worden ist, kann das Leuchtmittel bzw. dessen Schaltung in den Ausgangszustand zurückversetzt werden, so dass der Signalgeber deaktiviert ist, sofern sich das Leuchtmittel nicht mehr in der vorbestimmten, nicht bevorzugten Einbaulage oder nicht mehr in dem vorbestimmten nicht bevorzugten Betriebszustand befindet.

Bedarfsweise kann alternativ oder zusätzlich ein Signalgeber vorgesehen sein, der im aktivierten Fall anzeigt, dass sich das Leuchtmittel in einem bevorzugten Betriebszustand befindet und keine Umpoleinheit betätigt, das Leuchtmittel nicht gegenüber der Fassung gedreht oder auf andere Art in den Betriebszustand des Leuchtmittels eingegriffen werden sollte.

Wenn aus funktionalen Gründen wenigstens ein Sensorelement vorgesehen ist, das in einer ersten vorbestimmten Einbaulage oder einem ersten vorbestimmten Betriebszustand zu einem elektrischen Verlust führt, in einer zweiten vorbestimmten Einbaulage oder in einem zweiten vorbestimmten Betriebszustand jedoch keinen oder einen geringeren elektrischen Verlust verursacht, kann die Schaltung des Leuchtmittels zusätzlich einen Signalgeber aufweisen, um anzuzeigen, dass sich das Leuchtmittel in einer mit einem höheren elektrischen Verlust behafteten Einbaulage bzw. in einem mit einem höheren elektrischen Verlust behafteten Betriebszustand befindet. Der Signalgeber ist dabei so vorgesehen, dass er in der ersten vorbestimmten Einbaulage bzw. im ersten vorbestimmten Betriebszustand aktiviert ist. Das Sensorelement kann dabei vorzugsweise durch ein Relais, insbesondere Halbleiterrelais und/oder Kleinspannungsrelais, gebildet werden. Der Monteur wird dadurch veranlasst, das Leuchtmittel in Bezug zur Fassung zu drehen, bedarfsweise die Kontakte eines Kontaktabschnitts umzupolen,einen Kontakt über einen entsprechenden Schalter im Austausch zu einem anderen Kontakt desselben Kontaktabschnitts in die elektrische Verschaltung der Leuchteinheit einzubeziehen. Auf diese Weise kann dann erreicht werden, dass das Sensorelement die elektrische Leistung nicht oder weniger stark herabsetzt.

Bedarfsweise kann alternativ oder zusätzlich ein Signalgeber, bedarfsweise ein weiterer Signalgeber, vorgesehen sein, der im aktivierten Fall anzeigt, dass sich das Leuchtmittel in einer bevorzugten Einbaulage etwa mit geringem Verlust oder geringer Leistungsaufnahme befindet und ein Betrieb des Leuchtmittels ohne weiteres Eingreifen vorgeschlagen oder empfohlen wird.

Vorzugsweise ist die Schutzvorrichtung derart ausgebildet, dass im teilmontierten Zustand des Leuchtmittels die Berührungsspannung an einem der Schutzvorrichtung zugeordneten elektrischen Kontakt unterhalb von 50 Volt (AC) und/oder 120 Volt (DC) liegt. In diesem Fall kann die Gefahr eines elektrischen Stromschlags ausgeschlossen werden. Unter einem elektrischen Stromschlag in diesem Sinne wird folglich ein die Gesundheit des Benutzers gefährdender Stromschlag verstanden. Ist die Berührungsspannung gering genug, kann die Gefährdung der Gesundheit eines Benutzers ausgeschlossen werden. Um nicht nur Menschen, sondern auch andere Lebewesen oder besondere elektrische Einheiten, gegenüber einem elektrischen Schlag zu schützen, kann die Schutzvorrichtung zur Unterschreitung einer Berührungsspannung von 25 Volt (AC) und/oder 60 Volt (DC) ausgebildet sein. Mit anderen Worten muss die Berührungsspannung nicht bis auf 0 Volt (AC/DC) gesenkt werden, um die Gefahr zu beseitigen, dass der Betreiber einen Stromschlag im Sinne der Erfindung erhält.

Alternativ oder zusätzlich kann zur Vermeidung eines Stromschlags für den Monteur vorgesehen sein, dass zwischen den Kontaktabschnitten bei aktivierter Schutzvorrichtung ein Widerstand von wenigstens 2 MΩ vorgesehen ist. Dieser Widerstand ergibt sich insbesondere beim Anlegen der Netzspannung an einen Kontaktabschnitt. Das Leuchtmittel ist dann insbesondere zum Betrieb mit dieser Netzspannung vorgesehen.

Zur Erhöhung der Flexibilität des Einsatzes des Leuchtmittels bietet es sich an, wenn das Leuchtmittel kompatibel zu einer Leuchtstofflampe bzw. Leuchtstoffröhre ausgebildet ist. So kann das Leuchtmittel, bei dem es sich nicht um eine Leuchtstoffröhre handelt, ohne Probleme in einer Fassung betrieben werden, die zum Betrieb einer Leuchtstoffröhre vorgesehen ist. Besonders bevorzugt ist es, wenn das Leuchtmittel kompatibel zu Leuchtstoffröhren vom Typ T4, T5, T8, T10 und T12 ausgebildet ist. Dann kann das Leuchtmittel ohne Probleme als Ersatz für eine Leuchtstoffröhre der zuvor genannten Art in eine korrespondierende Fassung eingesetzt und dort betrieben werden. Zusätzlich oder alternativ kann vorgesehen sein, dass das Leuchtmittel zur Aufnahme und zum Betrieb in einer Fassung des Typs G5 oder G13 ausgebildet ist.

Die eingangs genannte Aufgabe wird auch bei einem System mit den Merkmalen des Oberbegriffs von Anspruch 35 und zwar dadurch gelöst, dass das Leuchtmittel nach einem der Ansprüche 1 bis 34 ausgebildet ist und dass die Schutzvorrichtung im in der Fassung montierten Zustand des Leuchtmittels zwangsweise deaktiviert und im demontierten Zustand aktiviert ist.

Auch die durch das System erzielten Vorteile beruhen darauf, dass die Schutzvorrichtung, welche verhindert, dass der Benutzer des Leuchtmittels einen elektrischen Schlag bei der Montage oder Demontage des Leuchtmittels erhält, in das eigentliche Leuchtmittel und nicht in die Leuchte integriert ist.

Besonders bevorzugt ist es in diesem Zusammenhang, wenn die Fassung der Leuchte zum Betrieb mit Leuchtstoffröhren geeignet ist. Dadurch ist es möglich, die Leuchte, beziehungsweise die entsprechende Fassung, sowohl mit Leuchtstoffröhren als auch mit anderen Leuchtmitteln zu betreiben. Soll von der Verwendung von Leuchtstoffröhren auf andere Leuchtmittel übergegangen werden, ist keine oder lediglich eine geringfügige Nachrüstung der Fassung oder Leuchte erforderlich. Durch die Integration einer Schutzvorrichtung in ein Leuchtmittel, bei dem es sich nicht um eine Leuchtstoffröhre handelt, ist sichergestellt, dass der Benutzer keinen elektrischen Schlag erhalten kann. Im Übrigen kann bei diesem System problemlos auch eine Leuchtstoffröhre betrieben werden, ohne dass die Fassung und/oder die Leuchte überhaupt oder jedenfalls aufwendig, verändert werden müssen.

Wenn das Leuchtmittel des Systems wenigstens einen magnetisch zu betätigenden Schalter aufweist, kann vorgesehen sein, dass die Fassung und/oder die Leuchte wenigstens einen Magneten zur Betätigung des magnetisch zu betätigenden Schalters aufweist. Entsprechende Magnete können problemlos auch nachträglich an bestehenden, konventionellen Fassungen beispielsweise durch Ankleben vorgesehen werden. Außerdem kann der wenigstens eine Magnet so platzsparend an oder in der Fassung vorgesehen sein, dass die Fassung trotz des Magnets auch mit einer konventionellen Leuchtstoffröhre betrieben werden kann.

Wenn die Schutzvorrichtung des Leuchtmittels wenigsten einen magnetisch zu betätigenden Schalter aufweist, kann auch vorgesehen sein, dass wenigstens ein Klips vorgesehen ist. Dieser Klips kann dann wenigstens einen Magneten aufweisen und am Leuchtmittel, an der Fassung und/oder der Leuchte befestigt sein. Wird der Klips vorzugsweise nachträglich, also nach dem Montieren des Leuchtmittels, angebracht, gelangt der wenigstens eine Magnet in die Nähe des wenigstens einen magnetisch zu betätigenden Schalters, wodurch dieser geschlossen wird. Damit ist die entsprechende Schutzvorrichtung in der deaktivierten Stellung und das Leuchtmittel kann betrieben werden.

Die Erfindung ist nachfolgend anhand von einer lediglich Ausführungsbeispiele darstellenden Zeichnung näher erläutert. In der Zeichnung zeigt:
- Fig. 1A-1D: Systeme des Standes der Technik aus einer Leuchtstoffröhre und einer Fassung einer Leuchte mit unterschiedlicher Verdrahtung,
- Fig. 2: ein erstes Beispiel eines Leuchtmittels mit einem mechanischen Berührungsschutz in einem Längsschnitt,
- Fig. 3: ein zweites Beispiel eines Leuchtmittels mit einem mechanischen Berührungsschutz in einem Längsschnitt,
- Fig. 4A-4D: ein drittes Beispiel eines Leuchtmittels mit einem mechanischen Berührungsschutz in verschiedenen Schnittansichten,
- Fig. 5A,5B: ein viertes Beispiel eines Leuchtmittels mit einem mechanisch zu betätigenden Druckschalter in schematischer Darstellung,
- Fig. 6A-6E: ein fünftes Beispiel eines Leuchtmittels mit einem mechanisch zu betätigenden Druckschalter in unterschiedlichen Ansichten,
- Fig. 7A,7B: ein sechstes Beispiel eines Leuchtmittels mit einem mechanisch zu betätigenden Druckschalter in schematischer Darstellung in unterschiedlichen Stellungen,
- Fig. 8A-8C: ein siebtes Beispiel eines Leuchtmittels mit einem mechanisch zu betätigenden Drehschalter in unterschiedlichen Stellungen,
- Fig. 9A-9C: ein achtes Beispiel eines Leuchtmittels mit einem mechanisch zu betätigenden Drehschalter in verschiedenen Darstellungen und unterschiedlichen Stellungen,
- Fig. 10: ein neuntes Beispiel eines Leuchtmittels mit einem elektrisch zu betätigenden Schalter in schematischer Darstellung,
- Fig. 11: ein zehntes Beispiel eines Leuchtmittels mit einem elektrisch zu betätigenden Schalter in schematischer Darstellung,
- Fig. 12: ein elftes Beispiel eines Leuchtmittels mit einem magnetisch zu betätigenden Schalter in schematischer Darstellung,
- Fig. 13: ein zwölftes Beispiel eines Leuchtmittels mit einem thermisch zu betätigenden Schalter in einer schematischen Darstellung,
- Fig. 14: ein dreizehntes Beispiel eines Leuchtmittels mit einem thermisch zu betätigenden Schalter in einer schematischen Darstellung,
- Fig. 15: ein System umfassend ein vierzehntes Beispiel eines Leuchtmittels mit einem magnetisch zu betätigenden Schalter in schematischer Darstellung,
- Fig. 16: ein erstes Ausführungsbeispiel eines erfindungsgemäßen Leuchtmittels mit einer sich an die Einbaulage anpassenden Verschaltung der Leuchteinheit,
- Fig. 17: ein fünfzehntes Beispiel eines Leuchtmittels mit einer sich an die Einbaulage anpassenden Verschaltung der Leuchteinheit,
- Fig. 18: ein sechzehntes Beispiel eines Leuchtmittels mit einer sich an die Einbaulage anpassenden Verschaltung der Leuchteinheit,
- Fig. 19: ein siebzehntes Beispiel eines Leuchtmittels mit einer sich an die Einbaulage anpassenden Verschaltung der Leuchteinheit,
- Fig. 20: ein zweites Ausführungsbeispiel eines erfindungsgemäßen Leuchtmittels mit einer sich an die Einbaulage anpassenden Verschaltung der Leuchteinheit,
- Fig. 21: ein drittes Ausführungsbeispiel eines erfindungsgemäßen Leuchtmittels mit einer sich an die Einbaulage anpassenden Verschaltung der Leuchteinheit,
- Fig. 22: ein viertes Ausführungsbeispiel eines erfindungsgemäßen Leuchtmittels mit einer sich an die Einbaulage anpassenden Verschaltung der Leuchteinheit,
- Fig. 23: ein fünftes Ausführungsbeispiel eines erfindungsgemäßen Leuchtmittels mit einer sich an die Einbaulage anpassenden Verschaltung der Leuchteinheit,
- Fig. 24: ein sechstes Ausführungsbeispiel eines erfindungsgemäßen Leuchtmittels mit einer sich an die Einbaulage anpassenden Verschaltung der Leuchteinheit,
- Fig. 25: ein siebtes Ausführungsbeispiel eines erfindungsgemäßen Leuchtmittels mit einer sich an die Einbaulage anpassenden Verschaltung der Leuchteinheit,
- Fig. 26: ein achtes Ausführungsbeispiel eines erfindungsgemäßen Leuchtmittels mit einer sich an die Einbaulage anpassenden Verschaltung der Leuchteinheit und
- Fig. 27: ein neuntes Ausführungsbeispiel eines erfindungsgemäßen Leuchtmittels mit einer sich an die Einbaulage anpassenden Verschaltung der Leuchteinheit.

In den Fig. 1A bis 1D sind Fassungen F mit darin eingesetzten Leuchtstoffröhren LS dargestellt, wobei die Fassungen F unterschiedlich verdrahtet sind. Der stromführende Kontakt L ist entweder unten oder oben in der Fassung F angeordnet. Der Nulleiter N ist ebenfalls entweder unten oder oben in Bezug auf die Fassung F vorgesehen. Die beiden verbleibenden Kontakte der Fassung F sind dann über einen Starter S miteinander verbunden.

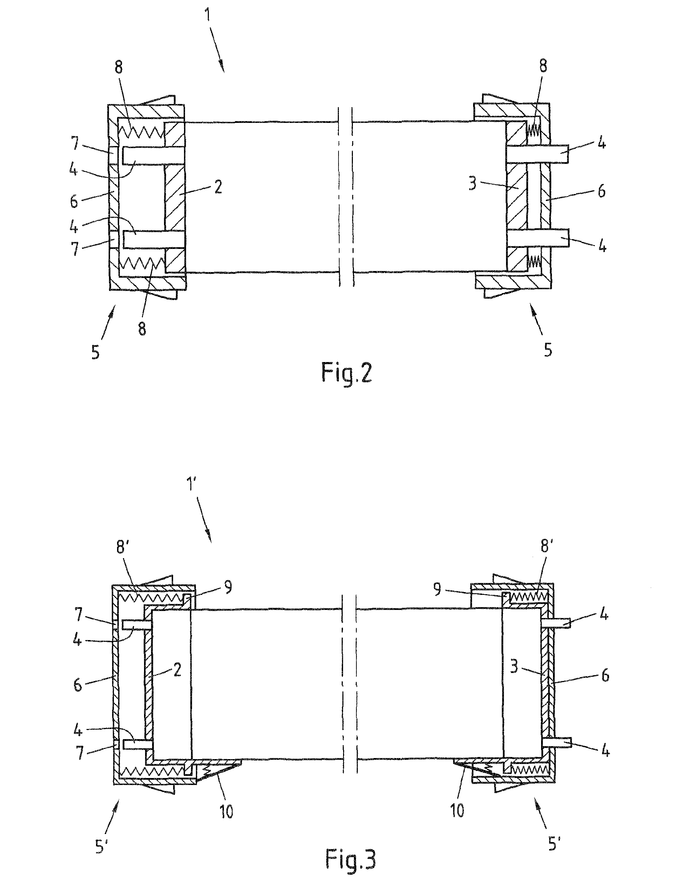

In Fig. 2 ist ein röhrenförmiges Leuchtmittel 1 dargestellt, das zum Ersatz von Leuchtstoffröhren ausgebildet ist. Dazu weist das Leuchtmittel 1 an den beiden gegenüberliegenden Enden jeweils einen Kontaktabschnitt 2,3 mit jeweils zwei elektrischen Kontakten 4 zum elektrischen Verbinden des Leuchtmittels 1 mit einer Fassung zur Aufnahme von Leuchtstoffröhren auf. Die Anschlussmaße des dargestellten Leuchtmittels 1 entsprechen den Anschlussmaßen einer konventionellen Leuchtstoffröhre. Jedem der beiden Kontaktabschnitte 2,3 ist eine Schutzvorrichtung 5 in Form eines mechanischen Berührungsschutzes zugeordnet. Jeder mechanische Berührungsschutz deckt in der auf der linken Seite dargestellten aktivierten Stellung der Schutzvorrichtung 5 die beiden elektrischen Kontakte 4 des zugeordneten Kontaktabschnitts 2,3 ab. Eine versehentliche Berührung der Kontakte 4 beim Einsetzen des Leuchtmittels 1 in eine Fassung wird auf diese Weise verhindert.

Die Schutzvorrichtung 5 umfasst eine Kappe 6, in der für jeden elektrischen Kontakt 4 eine Öffnung 7 vorgesehen ist. Die entsprechenden Öffnungen 7 und elektrischen Kontakte 4 sind dabei so zueinander ausgerichtet, dass die elektrischen Kontakte 4 eines Kontaktabschnitts 2,3 durch die Öffnungen 7 der Schutzkappe 6 hindurch dringen, wenn die Schutzkappe 6 nach innen gedrückt, d.h. eingedrückt, wird. Bei dieser Bewegung müssen die Federkräfte von Federmitteln 8 überwunden werden, die zwischen der Schutzkappe 6 und dem Kontaktabschnitt 2,3 vorgesehen sind. Durch das Eindrücken der Schutzkappe 6 gegen die Federkräfte der Federmittel 8 gelangt die Schutzvorrichtung 5 in eine deaktivierte Stellung, die auf der rechten Seite der Fig. 2 dargestellt ist. Die elektrischen Kontakte 4 ragen dann durch die Öffnungen 7 der Schutzkappe 6 nach außen und können so elektrisch mit einer Fassung verbunden werden.

In Fig. 3 ist ein abgewandeltes Leuchtmittel 1' dargestellt, bei dem die beiden Kontaktabschnitte 2,3 ebenfalls mit einer Schutzvorrichtung 5' in Form eines mechanischen Berührungsschutzes versehen sind. Im Unterschied zu dem in Fig. 2 dargestellten Leuchtmittel 1 weist das Leuchtmittel 1' gemäß Fig. 3 an jedem der Kontaktabschnitte 2,3 von dem entsprechenden Kontaktabschnitt 2,3 nach innen versetzt wenigstens einen nach außen abgekragten Abschnitt 9 auf. Gegenüber diesem wenigstens einen abgekragten Abschnitt 9 stützen sich Federmittel 8' ab, die mit ihren gegenüberliegenden Enden mit der Schutzkappe 6 der Schutzvorrichtung 5' verbunden sind. Die Schutzkappe 6 kann folglich soweit eingedrückt werden, bis die Schutzkappe 6 am entsprechenden Kontaktabschnitt 2,3 des Leuchtmittels 1' anliegt. In dieser deaktivierten Stellung der Schutzvorrichtung 5', die auf der rechten Seite der Fig. 3 dargestellt ist, treten die elektrischen Kontakte 4 durch korrespondierende Öffnungen 7 in der Schutzkappe 6 nach außen und stehen so für eine elektrische Verbindung mit einer Fassung zur Verfügung. Federbelastete Verriegelungsmechanismen 10 verhindern das versehentliche Eindrücken der Schutzkappen 6' in aktivierter Stellung der Schutzvorrichtungen 5'. Wird der Verriegelungsmechanismus 10 zusammengedrückt, kann die entsprechende Schutzkappe 5' über den Verriegelungsmechanismus 10 nach innen eingedrückt werden, wie dies auf der rechten Seite der Fig. 3 dargestellt ist.

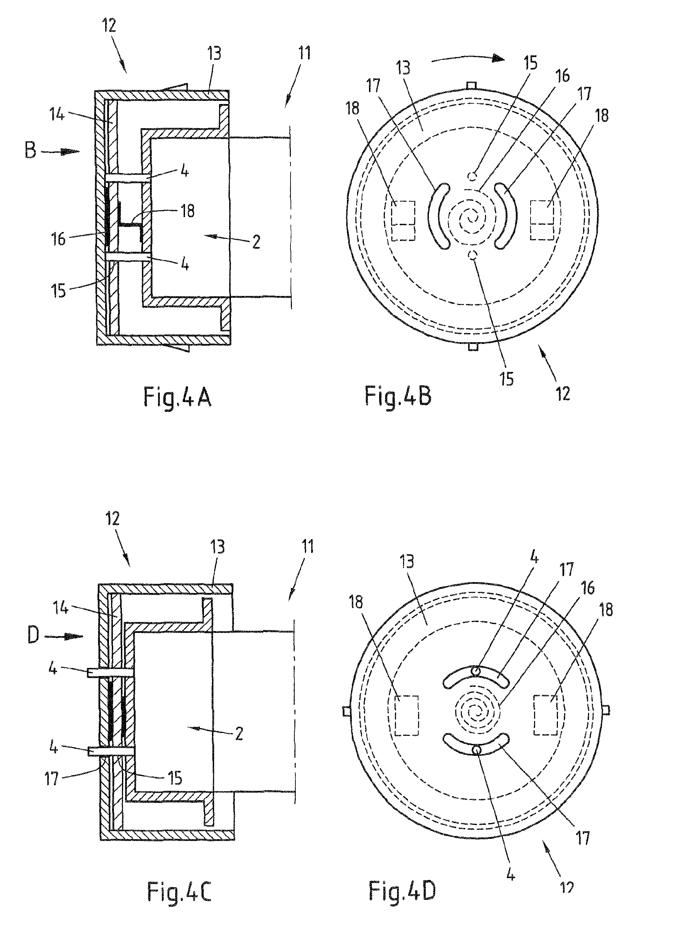

In Fig. 4 ist ein Leuchtmittel 11 mit einer Schutzvorrichtung 12. in Form eines mechanischen Berührungsschutzes für wenigstens einen der beiden Kontaktabschnitte 2 dargestellt. Der mechanische Berührungsschutz umfasst eine Schutzkappe 13, die mit einem Führungselement 14 verbunden ist. Das Führungselement 14 ist bei dem dargestellten und insoweit bevorzugten Leuchtmittel 11 scheibenförmig ausgebildet und weist zwei Öffnungen 15 auf, in denen jeweils ein elektrischer Kontakt 4 des Kontaktabschnittes 2 aufgenommen ist. Die Schutzkappe 13 ist über eine Spiralfeder 16 mit dem Führungselement 14 verbunden, so dass die Schutzkappe 13 gegenüber dem Führungselement 14 entgegen der Federkraft der Spiralfeder 16 verdreht werden kann. Anstelle einer Spiralfeder könnte auch eine Torsionsfeder vorgesehen sein.

Die Schutzkappe 13 weist zwei Öffnungen 17 auf, die bei dem dargestellten und insoweit bevorzugten Leuchtmittel 11 spaltförmig ausgebildet sind. Durch das Verdrehen der Schutzkappe 13 gegenüber dem Führungselement 14 gelangen die beiden Öffnungen 17 der Schutzkappe 13 in Überdeckung mit den Öffnungen 15 des Führungselements 14 und somit den elektrischen Kontakten 4 des Kontaktabschnitts 2. In dieser Stellung der Schutzkappe 13 kann die Schutzkappe 13 mitsamt dem Führungselement 14 gegenüber dem Leuchtmittel 11 nach innen eingedrückt werden. Dabei wird bei dem dargestellten und insoweit bevorzugten Leuchtmittel 11 wenigstens eine Druckfeder 18 zusammengedrückt, welche zwischen dem Kontaktabschnitt 2 und dem Führungselement 14 angeordnet ist. Durch die beschriebene Drehbewegung und das Eindrücken der Schutzkappe 13 des mechanischen Berührungsschutzes gelangt die Schutzvorrichtung 12 aus der in den Fig. 4A und 4B dargestellten aktivierten Stellung in die in den Fig. 4C und 4D dargestellte deaktivierte Stellung, in der die elektrischen Kontakte 4 durch die Schutzkappe 13 nach außen ragen.

Bei der Demontage des Leuchtmittels 11 wird die Schutzkappe 13, die im montierten Zustand des Leuchtmittels 11 von einer Fassung gehalten ist, von der Druckfeder 18 nach außen gedrückt, bis die Schutzkappe 13 frei drehbar ist und nicht mehr durch die durch die Öffnungen 17 ragenden elektrischen Kontakte 4 blockiert wird. In diesem Zustand wird die Schutzkappe 13 infolge der Federkraft der vorgespannten Spiralfeder 16 in die Ausgangsstellung zurückgedreht, in der die Öffnungen 17 der Schutzkappe 13 nicht in Überdeckung mit den elektrischen Kontakten 4 des zugehörigen Kontaktabschnitts 2 stehen.

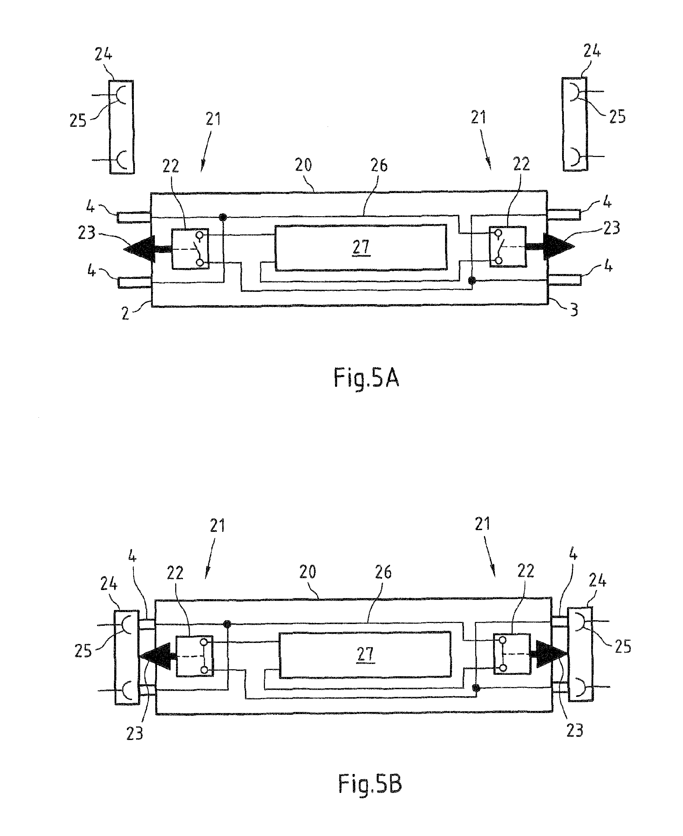

In Fig. 5 ist ein Leuchtmittel 20 mit Schutzvorrichtungen 21 in Form von mechanisch zu betätigenden Druckschaltern 22 dargestellt, welche beim dargestellten und insoweit bevorzugten Leuchtmittel als Drucktaster ausgebildet sind. In Fig. 5A ist die Schutzvorrichtung 21 in einer aktivierten Stellung mit geöffnetem mechanisch zu betätigenden Druckschalter 22 im demontierten Zustand des Leuchtmittels 20 dargestellt. In Fig. 5B ist die Schutzvorrichtung 21 in einer deaktivierten Stellung mit geschlossenem mechanisch zu betätigendem Druckschalter 22 im montierten Zustand des Leuchtmittels 20 dargestellt. Der mechanisch zu betätigende Druckschalter 22 umfasst ein Schaltelement 23, das von dem Kontaktabschnitt 2,3 zwischen den beiden elektrischen Kontakten 4 nach außen vorsteht. Das Schaltelement 23 ist derart konisch ausgebildet, dass das Schaltelement 23 beim Einsetzen des Leuchtmittels 20 in eine Fassung 24 zwangsweise nach innen gedrückt wird und so den mechanisch zu betätigenden Druckschalter 22 betätigt.

Wird das Leuchtmittel 20 in die Fassung 24 eingesetzt und werden die elektrischen Kontakte 4 mit den elektrischen Kontakten 25 der Fassung 24 verbunden, wird das Schaltelement 23 zwangsläufig nach innen gedrückt, d.h. eingedrückt, und schließt auf diese Weise den mechanisch zu betätigenden Druckschalter 22. Dabei wird ein Stromkreis 26 geschlossen, welcher die im Leuchtmittel 20 vorgesehene Leuchteinheit 27 mit Spannung versorgt.

Bei dem dargestellten und insoweit bevorzugten Leuchtmittel 20 ist jedem der beiden Kontaktabschnitte 2,3 eine Schutzvorrichtung 21 in Form eines mechanisch zu betätigenden Druckschalters 22 zugeordnet. Die beiden mechanisch zu betätigenden Druckschalter 22 sind untereinander und mit der Leuchteinheit 27 so verschaltet, dass der Stromkreis 26, in dem die Leuchteinheit 27 vorgesehen ist, erst dann geschlossen wird, wenn beide Druckschalter 22 durch das Einsetzen des Leuchtmittels 20 in die Fassung 24 geschlossen werden. Durch diese Verschaltung der mechanisch zu betätigenden Druckschalter 22 untereinander wird sichergestellt, dass die Berührungsspannung eines noch nicht in die Fassung 24 eingesetzten Kontaktabschnitts 2,3 im teilmontierten Zustand einen vorbestimmten Grenzwert nicht überschreitet. Die beiden mechanisch zu betätigenden Druckschalter 22 sind vorzugsweise federbelastet, so dass die Schutzvorrichtungen 21 beim Entfernen des Leuchtmittels 20 aus der Fassung 24 von selbst wieder in die aktivierte Stellung übergehen.

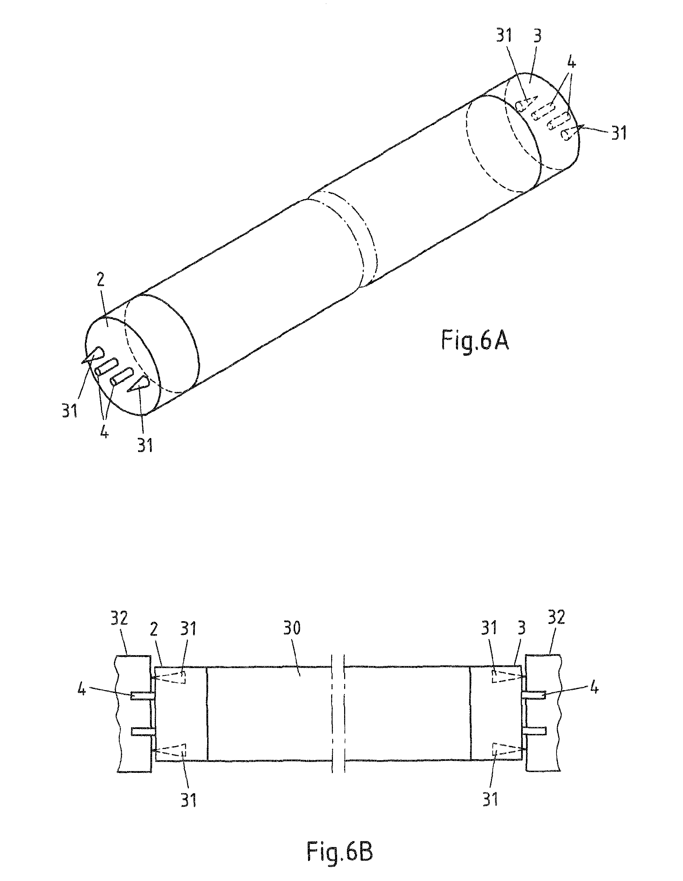

In Fig. 6A ist ein Leuchtmittel 30 mit zwei Schaltelementen 31 pro Kontaktabschnitt 2,3 dargestellt. Dabei kann jedes Schaltelement 31 mit einem separaten mechanisch zu betätigenden Druckschalter verbunden sein. Es können aber auch beide Schaltelemente 31 eines Kontaktabschnitts 2,3 mit einem einzigen mechanisch zu betätigenden Druckschalter verbunden sein. Der wenigstens eine mechanisch zu betätigende Druckschalter wird dann je nach Anordnung der Schaltelemente 31 geschlossen, wenn eines der Schaltelemente 31 oder beide Schaltelemente 31 beim Einsetzen des Leuchtmittels 30 in eine Fassung 32 eingedrückt werden. Die Schaltelemente 31 sind dazu vorzugsweise federbelastet, so dass sie gegen eine Federkraft nach innen gedrückt werden können. In Fig. 6B ist das Leuchtmittel 30 in einem montierten Zustand dargestellt. Durch Kontakt mit der Fassung 32 ist im montierten Zustand jedes der Schaltelemente 31 nach innen eingedrückt, wodurch die mechanisch zu betätigenden Druckschalter der Kontaktabschnitte 2,3 geschlossen sind.

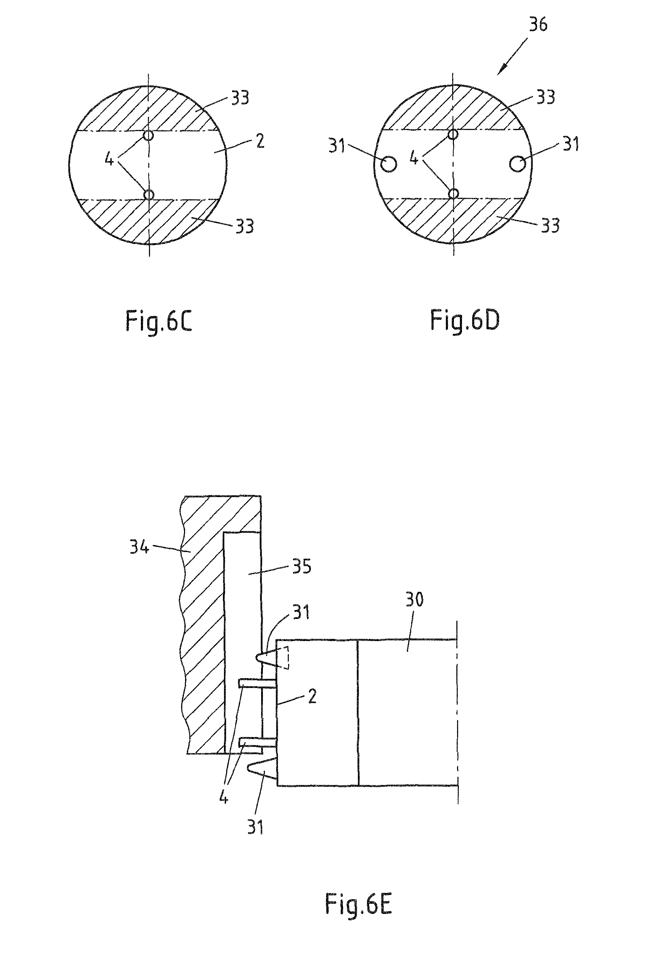

Bei dem dargestellten und insoweit bevorzugten Leuchtmittel können die Schaltelemente 31 alternativ an einer beliebigen Stelle in den in der Fig. 6C dargestellten Abschnitten 33 vorgesehen sein, wobei in jedem der beiden Abschnitte 33 ein Schaltelement 31 vorgesehen sein muss. Dadurch wird sichergestellt, dass die Schaltelemente 31 außerhalb der elektrischen Kontakte 4 des jeweiligen Kontaktabschnitts 2,3 vorgesehen sind. Durch diese Anordnung der Schaltelemente 31 wird sichergestellt, dass die Schaltelemente 31 eines Kontaktabschnitts 2,3 erst dann nach innen eingedrückt sind, wenn der entsprechende Kontaktabschnitt 2,3 bereits so weit in die Fassung 32 eingesetzt worden ist, dass ein versehentliches Berühren der elektrischen Kontakte 4 des entsprechenden Kontaktabschnitts 2,3 ausgeschlossen ist.

In Fig. 6D ist ein Kontaktabschnitt einer Schutzvorrichtung 36 dargestellt, der sich von der in der Fig. 6C dargestellten Schutzvorrichtung dadurch unterscheidet, dass außerhalb der Abschnitte 33 und seitlich zu den Kontakten 4 zwei weitere Schaltelemente 31 vorgesehen sind, wobei jeweils ein Schaltelement 31 auf beiden Seiten der Verbindungslinie zwischen den Kontakten 4 angeordnet ist. Dies erhöht die Sicherheit, dass entsprechende Schaltelemente 31, wenn auch nicht zwingend alle Schaltelemente 31, nur in einer Stellung eingedrückt sind, in der der Benutzer nicht versehentlich an die Kontakte 4 des entsprechenden Kontaktabschnitts 2 gelangen kann. Wenn nicht alle Schaltelemente 31 eines Kontaktabschnitts 2 eingedrückt sein müssen, um die Schutzvorrichtung zu deaktivieren, bietet es sich an, eine Mehrzahl von mechanisch zu betätigenden Schaltern parallel zu schalten, um den die Leuchteinheit umfassenden Stromkreis zu schließen. Wenn dagegen alle Schaltelemente 31 eines Kontaktabschnitts 2 eingedrückt sein müssen, damit die Schutzvorrichtung in die deaktivierte Stellung gelangt, müssen die entsprechenden mechanisch zu betätigenden Schalter seriell angeordnet sein.

In Fig. 6E ist das Leuchtmittel 30 in eine Fassung 34 mit einem Schlitz 35 zur Aufnahme der elektrischen Kontakte 4 dargestellt. Da die elektrischen Kontakte 4 und die Schaltelemente 31 der mechanisch zu betätigenden Druckschalter in einer Reihe angeordnet sind, müssen die Schaltelemente 31 in diesem Fall breit genug ausgeführt sein, dass sie trotz des Spalts 35 der Fassung 34 weit genug eingedrückt werden, um den beziehungsweise die mechanisch zu betätigenden Druckschalter zu schließen. Ferner verjüngen sich die Schaltelemente 31 in Richtung ihrer freier Enden, damit die Schaltelemente 31 beim Einführen des entsprechenden Kontaktabschnitts 2 in die Fassung nicht im Schlitz 35 blockieren. Die Schaltelemente 31 werden durch die Verjüngung eingedrückt und blockieren nicht das weitere Einführen des Kontaktabschnitts 2.

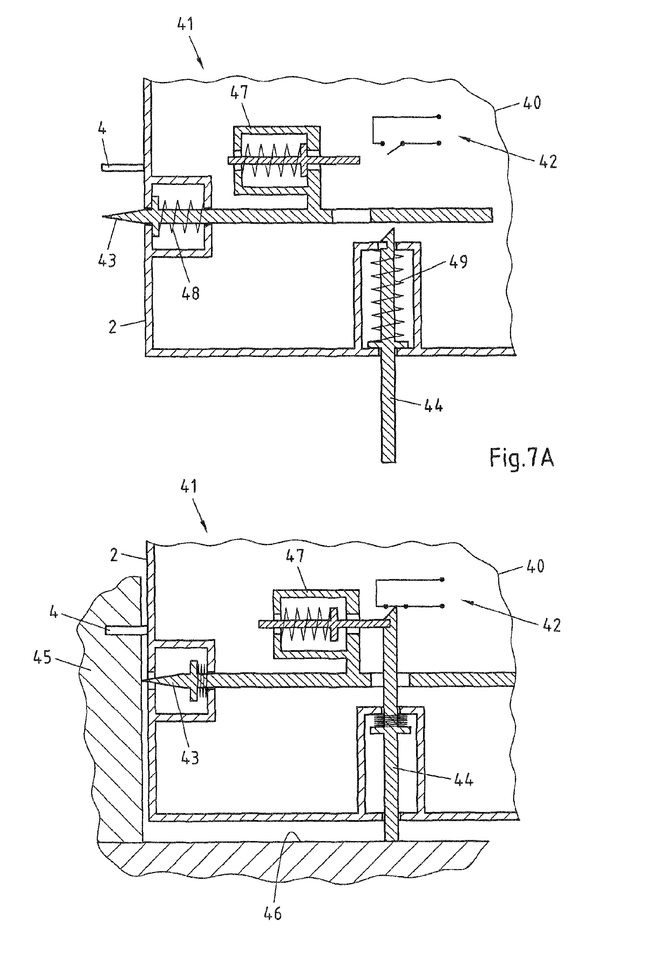

In den Fig. 7A und 7B ist ein Detail eines Leuchtmittels 40 dargestellt, bei dem die Schutzvorrichtung in Form eines mechanisch zu betätigenden Druckschalters ausgebildet ist. Die Schutzvorrichtung 41 umfasst ferner zwei Schaltelemente 43,44, die in unterschiedlichen Raumrichtungen aus dem Gehäuse des Leuchtmittels 40 nach außen vorstehen. Jedes der beiden Schaltelemente 43,44 ist derart federbelastet, dass die Schaltelemente 43,44 infolge der Federkraft nach außen gedrückt werden. Das erste Schaltelement 43 ragt parallel zu den elektrischen Kontakten 4 des entsprechenden Kontaktabschnitts 2 gegenüber diesem nach außen vor. Das zweite Schaltelement 44 ragt senkrecht zu dem ersten Schaltelement 43 gegenüber dem Rand des Leuchtmittels 40 vor.

Beim Einsetzen des entsprechenden Kontaktabschnitts 2 in eine Fassung 45 einer Leuchte wird das erste Schaltelement 43 automatisch nach innen gedrückt. In dieser Stellung ist das zweite Schaltelement 44 freigegeben, um ebenfalls nach innen gedrückt zu werden. Dies ist dann der Fall, wenn der entsprechende Kontaktabschnitt 2 vollständig in die Fassung 45 eingesetzt ist. Das zweite Schaltelement 44 gelangt dann in Anlage an eine Innenseite 46 der Fassung 45 bzw. der Leuchte und wird infolgedessen eingedrückt. Das zweite Schaltelement kann auch zum manuellen Eindrücken vorgesehen sein, nachdem das Leuchtmittel in die Fassung eingesetzt ist. Das zweite Schaltelement ist dann vorzugsweise leicht von außen zugänglich. Im eingedrückten Zustand des zweiten Schaltelements 44 gelangt dieses in Kontakt mit dem mechanisch zu betätigenden Druckschalter 42 und schließt diesen. In der entsprechenden Position des zweiten Schaltelements 44 gelangt dieses in Eingriff mit einem federbelasteten Arretierelement 47, welches das zweite Schaltelement 44 in seiner Stellung arretiert.

Das Arretierelement 47 ist mit dem ersten Schaltelement 43 verbunden, so dass das Arretierelement 47 und das zweite Schaltelement 44 außer Eingriff gelangen, sobald das erste Schaltelement 43 nicht mehr durch die Fassung 45 nach innen gedrückt wird. Dies ist beim Demontieren des entsprechenden Kontaktabschnitts 2 der Fall. Das Arretierelement 47 wird dann zusammen mit dem ersten Schaltelement 43 infolge der Federkraft des korrespondierenden Federmittels 48 nach außen verschoben.

Dann gelangt das zweite Schaltelement 44, das nun nicht mehr in Anlage mit der Fassung 45 steht, ebenfalls infolge der Federkraft des korrespondierenden Federmittels 49 in die Ausgangsstellung zurück, wodurch der mechanisch zu betätigende Druckschalter 42 geöffnet wird. Der mechanisch zu betätigende Druckschalter 42 steht dabei derart mit dem wenigstens einen Kontakt 4 des entsprechenden Kontaktabschnitts 2 in elektrischer Verbindung, dass an dem wenigstens einen elektrischen Kontakt 4 des entsprechenden Kontaktabschnitts 2 eine Berührungsspannung anliegt, die einen vorgegebenen Grenzwert nicht überschreitet, wenn der mechanisch zu betätigende Druckschalter 42 geöffnet ist. Eine Berührung durch den Benutzer kann dann als ungefährlich angesehen werden.

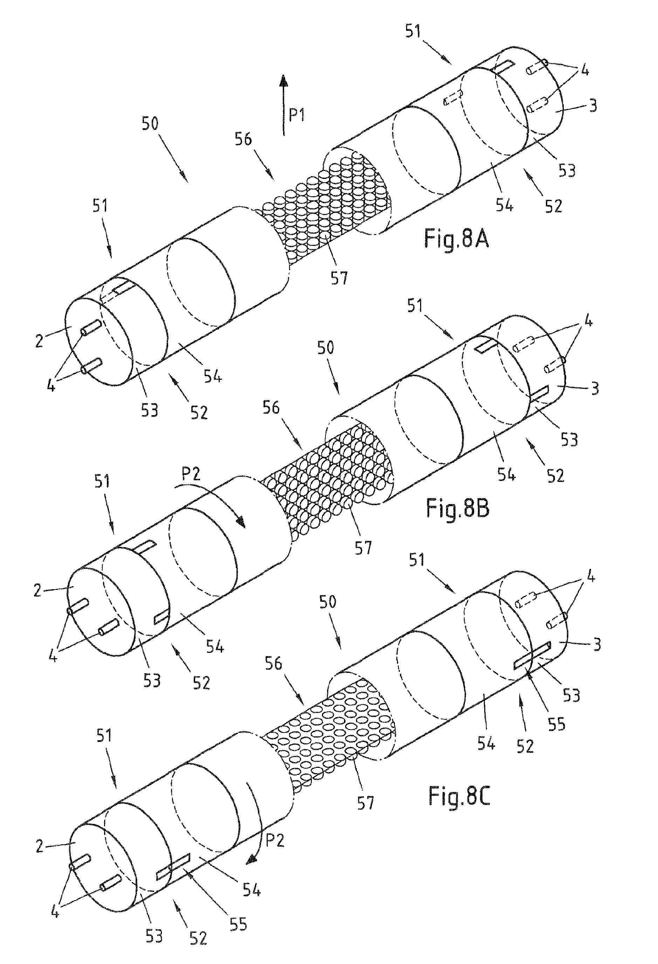

In den Fig. 8A bis 8C ist ein Leuchtmittel 50 mit einer Schutzvorrichtung 51 an jedem der beiden Kontaktabschnitte 2,3 in Form eines mechanisch zu betätigenden Drehschalters 52 dargestellt. Diese Ausgestaltung des Leuchtmittels 50 ist zweckmäßig, wenn das Leuchtmittel 50 zur Herstellung des elektrischen Kontakts nach dem Einführen in eine Fassung beispielsweise um 90° gedreht werden muss. In Fig. 8A sind die Schutzvorrichtungen 51 in einer aktivierten Stellung dargestellt. In dieser Stellung wird das Leuchtmittel 50 in der dargestellten Pfeilrichtung P1 in eine Fassung eingeschoben. Anschließend wird das Leuchtmittel 50 entsprechend der in der Fig. 8B dargestellten Pfeilrichtung P2 gedreht, um einen Kontakt zwischen den elektrischen Kontakten 4 der Kontaktabschnitte 2,3 und den elektrischen Kontakten der Fassung herzustellen. In dieser Position befinden sich die mechanisch zu betätigenden Drehschalter 52 in einer geöffneten Stellung.

Wird das Leuchtmittel 50 weiter gedreht, behalten die äußeren Abschnitte 53 der mechanisch zu betätigenden Drehschalter 52 ihre Lage bei, während die inneren Abschnitte 54 der mechanisch zu betätigenden Drehschalter 52 zusammen mit dem Rest des Leuchtmittels 50 weiter in Pfeilrichtung P2 gedreht werden. Durch diese zusätzliche Drehbewegung werden die mechanisch zu betätigenden Drehschalter 52 geschlossen. In der in der Fig. 8C dargestellten Stellung der mechanisch zu betätigenden Drehschalter 52 können diese über automatisch oder händisch zu betätigende Arretiervorrichtungen 55 arretiert werden.

Alternativ könnte auch vorgesehen sein, dass die Drehung des Leuchtmittels nach dem Einsetzen in die Fassung zum Schließen des Drehschalters führt. Der elektrisch leitende Kontakt zwischen den Kontakten und der Fassung wird dann erst anschließend durch ein weitergehendes Verdrehen des Leuchtmittels erreicht.

Bei dem dargestellten und insoweit bevorzugten Leuchtmittel wird die Leuchteinheit 56 aus einer Vielzahl von LEDs 57 gebildet. Dabei sind die LEDs 57 in der endgültigen Stellung des Leuchtmittels 50, in der die Schutzvorrichtungen 51 in deaktivierter Stellung vorgesehen sind, in der gewünschten Abstrahlrichtung gegenüber der Fassung ausgerichtet.

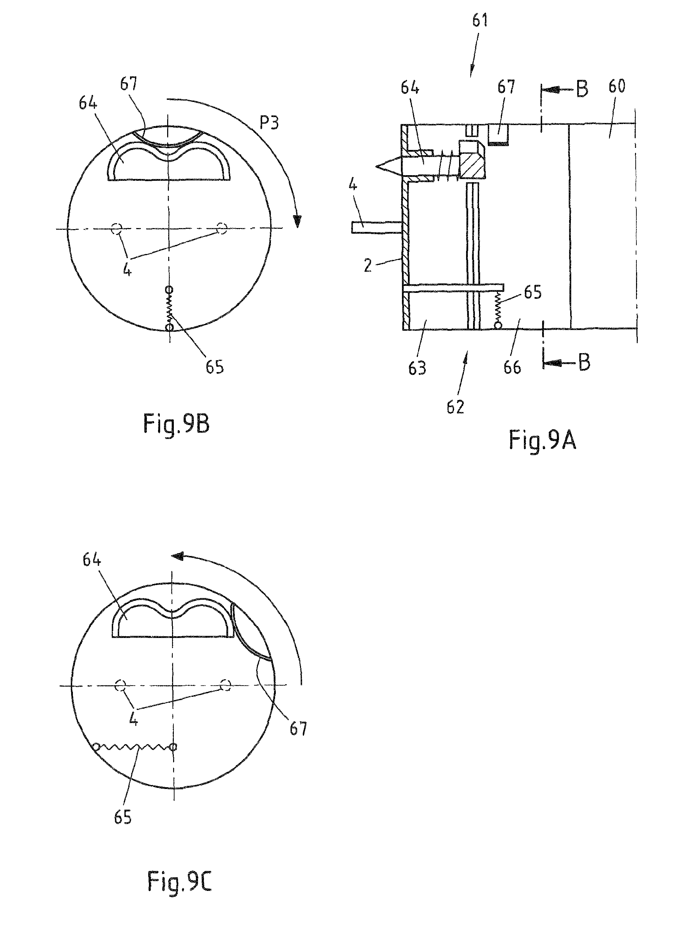

In den Fig. 9A bis 9C ist ein Leuchtmittel 60 mit Schutzvorrichtungen 61 in Form von mechanisch zu betätigenden Drehschaltern 62 dargestellt. Dabei ist das Leuchtmittel 60 in Fig. 9A in einem Längsschnitt dargestellt. Die Fig. 9B zeigt das Leuchtmittel in einer Schnittansicht gemäß Ebene B-B der Fig. 9A bei geöffnetem Druckschalter, während Fig. 9C das Detail gemäß Fig. 9B bei geschlossenem Drehschalter zeigt.

Die drehbaren äußeren Abschnitte 63 der mechanisch zu betätigenden Drehschalter 62 weisen ein stiftförmiges Schaltelement 64 auf, das gegen eine Federkraft nach innen eingedrückt werden kann. Darüber hinaus sind die drehbaren Abschnitte 63 der mechanisch zu betätigenden Drehschalter 62 über ein Federelement 65 mit einem feststehenden Abschnitt 66 des entsprechenden mechanisch zu betätigenden Drehschalters 62 verbunden. Dieses Federelement 65 sorgt dafür, dass die drehbaren Abschnitte 63 der mechanisch zu betätigenden Drehschalter 62 in einer Ausgangsstellung eine definierte Lage einnehmen.

Beim Einsetzen des Leuchtmittels 60 in eine Fassung gelangt das stiftförmige Schaltelement 64 in Anlage an die Fassung und wird nach innen eingedrückt. In dieser Stellung greift das Schaltelement 64 unter ein Federelement 67 des feststehenden Abschnitts 66 des Drehschalters 62. Zur Inbetriebnahme des Leuchtmittels 60 muss dieses in der in die Fassung eingesetzten Stellung noch entsprechend der dargestellten Pfeilrichtung P3 verdreht werden, wobei das Federelement 67 des feststehenden Abschnitts 66 des mechanisch zu betätigenden Drehschalters 62 zusammengedrückt wird. Nach Abschluss der Drehbewegung nimmt das Federelement 67 des feststehenden Abschnitts 66 des mechanisch zu betätigenden Drehschalters 62 wieder seine Ausgangsposition ein. In dieser Position wird der drehbare Abschnitt 63 des mechanisch zu betätigenden Drehschalters 62 gegen ein versehentliches Zurückdrehen blockiert.

Beim Herausnehmen des Leuchtmittels 50 aus der Fassung wird das federbelastete, stiftförmige Schaltelement 64 nach außen bewegt und gibt das Federelement 67 des feststehenden Abschnitts 66 des mechanisch zu betätigenden Drehschalters 62 frei, so dass der drehbare Abschnitt 63 des mechanisch zu betätigenden Drehschalters 62 automatisch durch die Federkraft der die beiden Abschnitte 63,66 des mechanisch zu betätigenden Drehschalters 62 verbindenden Federmittels 65 in die Ausgangslage zurückgedreht wird.

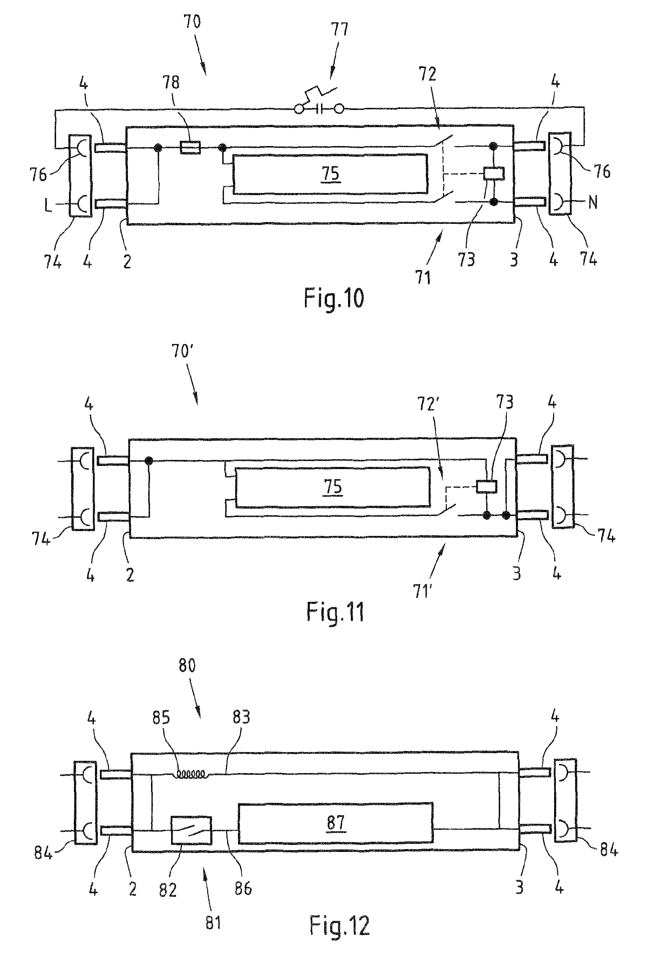

In Fig. 10 ist ein Leuchtmittel 70 mit einem elektrisch zu betätigenden Schalter 71 als Schutzvorrichtung 72 vorgesehen. Bei dieser Ausgestaltung des Leuchtmittels 70 ist ein einziger zweipolig schaltender, elektrisch zu betätigender Schalter 71 ausreichend, um beide Kontaktabschnitte 2,3 gegenüber einem versehentlichen Stromschlag abzusichern. Dabei ist der elektrisch zu betätigende Schalter so mit einem Sensorelement 73 und den Kontakten 4 der beiden Kontaktabschnitte 2,3 verschaltet, dass über das Sensorelement 73, bei dem es sich um ein Relais oder ein Relais handeln kann, nur dann Strom fließt, wenn das Leuchtmittel 70 mit beiden Kontaktabschnitten 2,3 in eine Fassung 74 eingesetzt ist. Wird das Sensorelement 73 von Strom durchflossen, schließt es automatisch den elektrisch zu betätigenden Schalter 71 und die Leuchteinheit 75 wird mit Spannung versorgt. Die Einheit zwischen Sensorelement 73 und elektrisch betätigtem Schalter 71 ist selbsthaltend, bis die Fassung 74 wieder spannungsfrei geschaltet wird, und vorzugsweise als Relais ausgebildet.

Damit es zu keinem Kurzschluss kommen kann, wenn das Leuchtmittel 70 versehentlich auf dem Kopf stehend in die dargestellte Fassung 74 eingesetzt wird, ist eine Sicherung 78 zwischen den Kontaktabschnitten 2,3 vorgesehen. Egal in welcher Einbaulage das Leuchtmittel 70 in die Fassung 74 eingesetzt wird, ein bedenklicher Betriebszustand für den Monteur sowie die Fassung 74 etc. ist sicher verhindert. Im schlimmsten Falle muss die Sicherung 78 ausgetauscht werden, wozu die Sicherung 78 von außen leicht zugänglich und austauschbar vorgesehen sein kann.

Der in Fig. 10 dargestellte, elektrisch zu betätigende Schalter 71 wird nur dann geschlossen, wenn das Leuchtmittel 70 in eine Fassung 74 eingesetzt wird, bei der zwei elektrische Kontakte 76, die einander gegenüberliegenden Kontaktabschnitten 2,3 zugeordnet sind, untereinander elektrisch verbunden sind. Ein Starter 77 kann im System verbleiben oder aber alternativ durch eine Brücke ersetzt werden.

Ist dies nicht der Fall, kann die Schutzvorrichtung 71' als eine bei Einsetzen in die Fassung 74' leitende, hochohmige Verbindung zwischen den Kontaktabschnitten vorgesehen sein. Bei dem Ausführungsbeispiel nach Fig. 11 ist in dieser Verbindung das den elektrisch zu betätigenden Schalter 72' ansteuernde Sensorelement 73 vorgesehen, das hinreichend hochohmig ist, dass für den Monteur beim Einsetzen des Leuchtmittels in die Fassung keine Gefahr eines Stromschlags besteht. Wenn beide Kontaktabschnitte 2,3 des Leuchtmittels in die korrespondierende Fassung 74 eingesetzt sind, ist das Sensorelement 73 stromdurchflossen und schließt automatisch den elektrisch zu betätigenden Schalter 72', so dass die Leuchteinheit 75 in dem entsprechenden, sekundären Stromkreis mit Spannung versorgt wird. Das Sensorelement 73 und der elektrisch zu betätigende Schalter 72 sind im Lastfalle selbsthaltend angeordnet.

In der Fig. 12 ist ein Leuchtmittel 80 mit einer Schutzvorrichtung 81 in Form eines magnetisch zu betätigenden Schalters 82 dargestellt. Die Schutzvorrichtung 81 umfasst einen primären Stromkreis 83, der beim Einsetzen des entsprechenden Kontaktabschnitts 2,3 in die Fassung 84 mit Spannung versorgt wird. In dem primären Stromkreis 83 befindet sich eine Spule 85, die im stromdurchflossenen Zustand ein Magnetfeld erzeugt. Dieses Magnetfeld schließt den benachbart angeordneten magnetisch zu bestätigenden Schalter 82. Dadurch wird ein sekundärer Stromkreis 86 geschlossen, der dann die Leuchteinheit 87 mit Spannung versorgt.

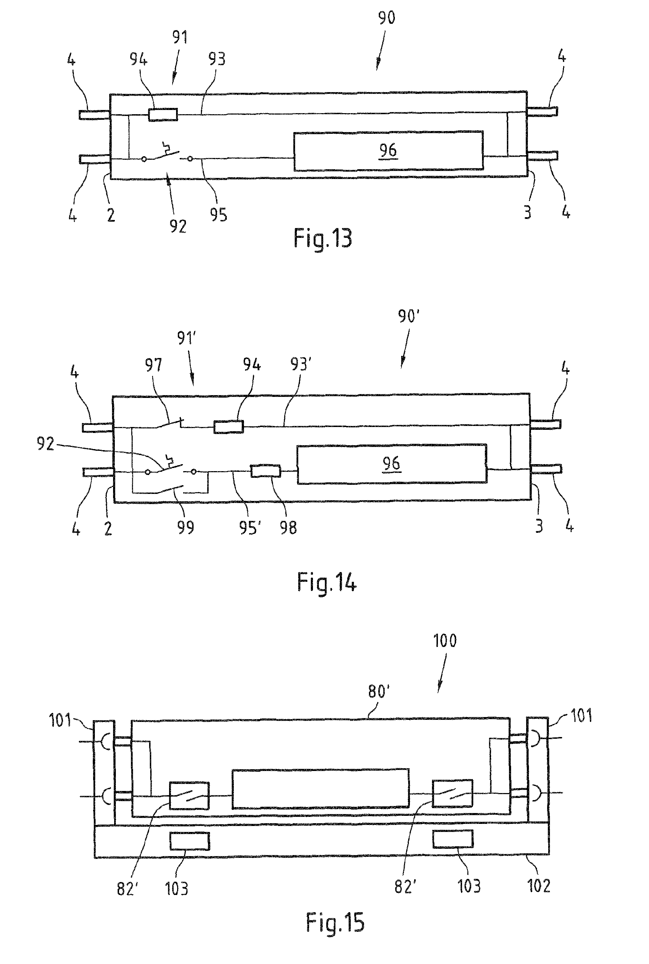

In Fig. 13 ist ein Leuchtmittel 90 mit einer Schutzvorrichtung 91 umfassend einen thermisch zu betätigenden Schalter 92 dargestellt. Erst wenn beide Kontaktabschnitte 2,3 in die Fassung einer Leuchte eingesetzt sind, fällt über einen primären Stromkreis 93 eine Spannung ab. Dieser Spannungsabfall bewirkt eine Erwärmung eines Heizwiderstandes 94 in dem primären Stromkreis 93. Durch die von dem Heizwiderstand 94 erzeugte Wärme wird ein angrenzend angeordneter, thermisch zu betätigender Schalter 92 geschlossen. Dadurch wird ein sekundärer Stromkreis 95 geschlossen, in dem die Leuchteinheit 86 des Leuchtmittels 90 vorgesehen ist.

In Fig. 14 ist ein zur Darstellung der Fig. 13 abgewandeltes Leuchtmittel 90' mit einer Schutzvorrichtung 91' in Form eines thermisch zu betätigenden Schalters 92 dargestellt. Im Unterschied zu dem Leuchtmittel 90 gemäß Fig. 13 ist im primären Stromkreis 93' ein Schalter 97 vorgesehen, der im Ausgangszustand geschlossen ist. Wenn beide Kontaktabschnitte 2,3 des Leuchtmittels 90' in die Fassung eingesetzt sind, wird der Heizwiderstand 94 demnach von Strom durchflossen und erwärmt sich. Infolgedessen wird der angrenzend vorgesehene thermisch zu betätigende Schalter 92 geschlossen. Dadurch wird der sekundäre Stromkreis 95' geschlossen, in dem sich neben der Leuchteinheit 96 auch ein Sensorelement, etwa in Form eines Relais 98, befindet. Dieses Sensorelement 98 sorgt durch Öffnen des Schalters 97' im primären Stromkreis 93' und Schließen eines parallel zu dem thermisch zu betätigenden Schalter 92 angeordneten Schalters 99 für eine Selbsthaltung des sekundären Stromkreises 95'. Während des Betriebs des Leuchtmittels 30' wird letztlich ein paralleler Stromfluss durch den Heizwiderstand 94 unterbunden.

In der Fig. 15 ist ein System 100 umfassend eine Fassung 101 und ein Leuchtmittel 80' dargestellt, das ähnlich dem Leuchtmittel 80 gemäß Fig. 11 ausgebildet ist und zwei magnetisch zu betätigende Schalter 82' aufweist. Die Fassung 101 bzw. die die Fassung 101 aufweisende Leuchte 102 weißt zwei Dauermagneten 103 auf, die im montierten Zustand des Leuchtmittels 80' in der Nähe der magnetisch zu betätigenden Schalter 82' (Reed-Kontakte) angeordnet sind, wodurch die magnetisch zu betätigenden Schalter 82' geschlossen werden.

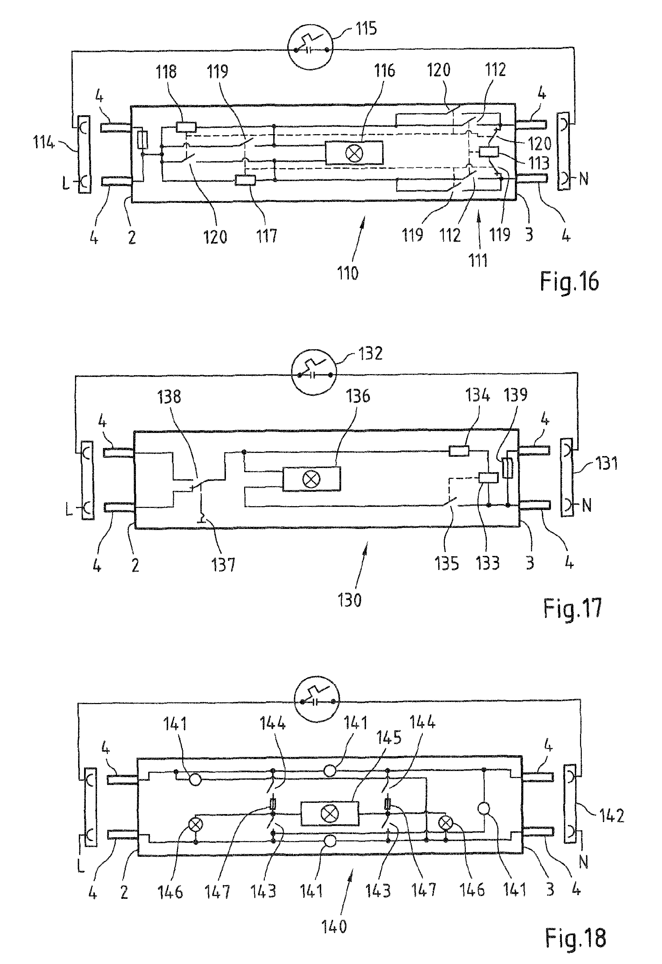

In der Fig. 16 ist ein Leuchtmittel 110 dargestellt, das eine Spannungsverschleppung von einem zum anderen Kontaktabschnitt 2,3 sicher verhindert, die für den Monteur die Gefahr eines elektrischen Schlags bedeuten würde. Das Leuchtmittel 110 weist dazu eine Schutzvorrichtung 111 auf, die einen zweipoligen Schalter 112 und ein Sensorelement 113 umfasst. Beim dargestellten und insoweit bevorzugten Leuchtmittel 110 sind das Sensorelement 113 und der zweipolige Schalter 112 in einem Relais zusammengefasst, bei dem es sich um ein Kleinspannungsrelais handeln kann. Beim beidseitigen Einsetzen des Leuchtmittels 110 in die Fassung 114 schließt sich ein primärer Stromkreis zwischen jeweils einem Kontakt 4 eines Kontaktabschnitts 2,3 zum anderen Kontakt 4 des Kontaktabschnitts 2,3 und über den Starter 115 der Fassung 114 von einem zum anderen Kontaktabschnitt 2,3. Durch das Schließen des primären Stromkreises fällt über das Sensorelement 113 eine Spannung ab, egal wie die Fassung 114 an sich verdrahtet ist (vgl. Figur 1A bis 1D) und schließt den zugeordneten zweipoligen Schalter 112 und damit einen sekundären Stromkreis zum Betrieb des Leuchteinheit 116.

An den beiden weiteren Sensorelementen 117,118 liegt nun ebenfalls Spannung an. Den Sensorelementen 117,118 sind jeweils drei Schalter 119,120 zugeordnet und so ausgelegt, dass ein Sensorelement 117,118 nur dann die zugehörigen Schalter 119,120 schließt, wenn das Sensorelement 119,120 parallel nicht aber in Reihe mit dem Sensorelement 113 des primären Stromkreises angeordnet ist. Mithin schließt in der in Fig. 16 dargestellten Einbaulage das Sensorelement 117 die Schalter 119, so dass die Leuchteinheit 116 unter Spannung steht. Das Leuchtmittel 110 passt sich also eigenständig an die jeweilige Einbaulage des Leuchtmittels 110 in Bezug zur Fassung bzw. an die jeweils verwendete Fassung (vgl. Fig. 1A bis 1D) an, ohne dass es eines Eingriffs von Seiten des Monteurs bedarf. Gleichzeitig wird das Sensorelement 113 spannungsfrei geschaltet, so dass die Schalter 112 öffnen, denn die Stellung der Schalter 112 führt zu einer Selbsthaltung des sekundären Stromkreises. Dies hat zur Folge, dass während des Betriebs der Leuchteinheit 116 der Starter öffnet und somit weder Schaden nehmen oder die elektrische Leistung mindern kann.

In der Fig. 17 ist ein Leuchtmittel 130 dargestellt, das eine Spannungsverschleppung von einem Kontaktabschnitt 2,3 zum gegenüberliegenden Kontaktabschnitt 2,3 verhindert, die zu einer Gefährdung des Monteurs des Leuchtmittels 130 führen könnte. Dabei kann das Leuchtmittel 130 auch dann betrieben werden, wenn eine unerwünschte Einbaulage des Leuchtmittels 130 in Bezug zur Fassung 131 realisiert wird. Das Leuchtmittel 130 kann an den gewöhnlichen, aus dem Stand der Technik bekannten Fassungen (vgl. Fig. 1A bis 1D) betrieben werden, obwohl das Leuchtmittel 130 keinen Starter 132 oder keine Starterbrücke benötigt. Die beiden Kontaktabschnitte 2,3 sind über einen primären Stromkreis und einen sekundären Stromkreis miteinander verbunden. Der primäre Stromkreis ist durch den Widerstand des Sensorelements 133 und des zusätzlichen Widerstands 134 hinreichend hochohmig (> 2 MΩ), so dass der Monteur beim Einsetzen des Leuchtmittels 130 in die Fassung 131 keinen Stromschlag befürchten muss. Der sekundäre Stromkreis ist durch den Schalter 135 beim Einsetzen des Leuchtmittels 130 in die Fassung 131 zunächst geöffnet.

Fällt nach dem Einsetzen des Leuchtmittels 130 über den primären Stromkreis eine Spannung ab, wird der Schalter 135 elektrisch angesteuert über das Sensorelement 133 geschlossen, so dass die im sekundären Stromkreis vorgesehene Leuchteinheit 136 aufleuchtet. Es wird auf diese Weise sichergestellt, dass der sekundäre Stromkreis im teilmontierten Zustand des Leuchtmittels 130 geöffnet ist. Mithin sind das Sensorelement 133 und der Schalter 135, die in einem Relais zusammengefasst sein können, Bestandteil einer Schutzvorrichtung zur Vermeidung einer ungewollten Spannungsverschleppung von einem zum anderen Kontaktabschnitt 2, 3.

Würden die linken Kontakte der Fassung 131 gegenüber der Fig. 17 vertauscht oder stünde das Leuchtmittel 130 gegenüber der Darstellung in Fig. 17 auf dem Kopf, würde nach dem Einsetzen des Leuchtmittels 130 in die Fassung 131 zunächst kein Strom über den primären Stromkreis fließen. Dies würde vom Monteur jedoch als Signal und Aufforderung gewertet, einen mechanisch über eine Auslöseeinrichtung 137 zu betätigenden Schalter 138 umzulegen, wozu das Leuchtmittel 130 nicht aus der Fassung 131 entnommen werden müsste. Dadurch würde Spannung über den primären Stromkreis abfallen, der sekundäre Stromkreis geschlossen und die Leuchteinheit 136 leuchten.

Wenn das in Fig. 17 dargestellte Leuchtmittel 130 versehentlich in eine Fassung eingesetzt wird, in der die Netzspannung an den beiden Kontakten einer Seite der Fassung anliegt, kann kein kritischer Betriebszustand auftreten, da je nach Einbaulage des Leuchtmittels 130 entweder der Schalter 138 oder die Sicherung 139 einen Kurzschluss verhindern würden.

In der Fig. 18 ist ein Leuchtmittel 140 dargestellt, das vier Messeinrichtungen 141 umfasst, die jeweils den Spannungsabfall an einem anderen Paar von Kontakten 4 des Leuchtmittels 140 erfassen. Die Kontaktpaare setzen sich jeweils aus einem Kontakt 4 des einen Kontaktabschnitts 2 und einem Kontakt 4 des anderen Kontaktabschnitts 3 zusammen. Dies wäre für die Funktion des Leuchtmittels 140 jedoch nicht zwingend erforderlich. Anhand der Größe des Spannungsabfalls lässt sich auf die Einbaulage des Leuchtmittels 140 bzw. auf die Verdrahtung der Fassung 142 schließen. Es lässt sich ebenfalls erkennen, ob die Fassung 142 in Reihe oder parallel zu wenigstens einer weiteren Fassung geschaltet ist. Eine nicht im Einzelnen dargestellte Logikschaltung ist vorgesehen, die nach vorbestimmten Kriterien in Bezug auf die ermittelten Spannungsabfälle dafür sorgt, dass im Leuchtmittel 140 vorgesehene, elektrisch zu betätigende Schalter 143,144 in geeigneter Weise geschlossen werden, um das Leuchtmittel 140 in geeigneter Weise zu betreiben. Ohne dass die Messeinrichtungen 141 vorbestimmte Spannungsabfälle ermittelt, verhindert die Stellung der Schalter 143 eine niederohmige Verbindung zwischen den beiden Kontaktabschnitten 2,3 des Leuchtmittels 140, so dass der Monteur beim Einsetzen des Leuchtmittels 140 keinen Stromschlag erhalten kann.

Bei der in Fig. 18 dargestellten Einbaulage würde eine Messeinrichtung 141 die volle Netzspannung messen und die Logikschaltung erkennen, dass das Leuchtmittel 140 an beiden Kontaktabschnitten 2,3 in die Fassung 142 eingesetzt ist und daraufhin die Schalter 143 schließen. Infolgedessen würde die Leuchteinheit 145 leuchten. Die Schalter 143,144 sind im nicht vollständig in die Fassung 142 eingesetzten Zustand des Leuchtmittels 140 geöffnet, so dass in diesem Fall zwischen den Kontaktabschnitten 2,3 lediglich hochohmige Verbindungen über die Messeinrichtungen 141 bestehen. Dies bedeutet, dass die Schalter 141,143 Bestandteile der Schutzvorrichtung vor Spannungsverschleppung von einem zum anderen Kontaktabschnitt 2,3 im teilmontierten Zustand des Leuchtmittels 140 darstellen.

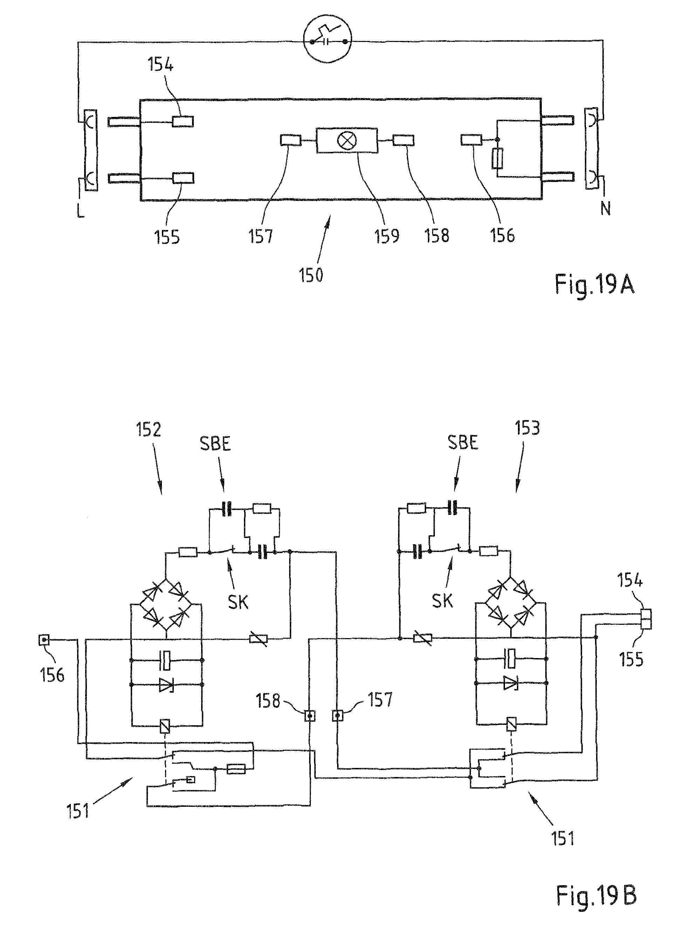

Für den Fall, dass die Netzspannung lediglich an den Kontakten 4 eines Kontaktabschnitts 2,3 anliegt, was nur bei besonders verdrahteten Fassungen, etwa zum Betrieb von Conversion LED Units, der Fall ist, wird einer der Signalgeber 146, bei denen es sich vorliegend um optische Signalgeber in Form von Leuchteinheiten, vorzugsweise LED, handelt, in den Stromkreis geschaltet. Dies zeigt dem Monteur, dass der Betrieb des Leuchtmittels 140 mit dieser Fassung nicht vorgesehen ist. Eine Gefährdung des Monteurs durch einen Stromschlag ist auch in diesem Falle ausgeschlossen. Zur Vermeidung eines Kurzschlusses bei einer fehlerhaften Ansteuerung der Schalter 143,144 durch die Logikschaltung sind die Sicherungen 147 vorgesehen. In der Fig. 19A ist ein Leuchtmittel 150 dargestellt, das zwei Kleinspannungsrelais 151 mit Vorschaltelektroniken 152,153 gemäß dem in Fig. 19B dargestellten Schaltplan aufweist. Der Schaltplan ist unter Verwendung international üblicher und dem Fachmann geläufiger Symbole dargestellt, so dass eine eingehende Erläuterung des Schaltplans entbehrlich ist. Der Schaltplan ist zwischen den in den in Fig. 19A dargestellten Kontakten 154-158 vorgesehen, die ebenfalls in der Fig. 19B eingetragen sind und für einen sicheren und geeigneten Betrieb der Leuchteinheit 159 sorgt. Die Relais 151 sind Bestandteil der Schutzvorrichtung gegenüber einer den Monteur gefährdenden Spannungsverschleppung von einem zum anderen Kontaktabschnitt 2,3.

Vorschaltelektroniken nach Fig. 19B oder in anderer Ausgestaltung können auch bei anderen Verschaltungen der Leuchtmittel vorgesehen sein, auch wenn dies nicht jedes Mal explizit erwähnt wird. Insbesondere werden Vorschaltelektroniken zusammen mit Kleinspannungsrelais verwendet, etwa um eine Platzersparnis zu erreichen. Die Vorschaltelektroniken dienen dann der Bereitstellung der Kleinspannung für das Schalten der Kleinspannungsrelais. Die Vorschaltelektroniken können dabei sowohl in die Fassung als auch in das Leuchtmittel integriert sein. Es bietet sich jedoch an, die Vorschaltelektronik in das Leuchtmittel zu integrieren, da dieses dann mit verschiedenen bzw. üblichen Fassungen betrieben werden kann.

Bei der dargestellten und insoweit bevorzugten Vorspannungselektronik sind Schaltkontakte SK vorgesehen, die über wenigstens eines der dargestellten Kleinspannungsrelais 151 geschaltet werden. Wenn die Schutzvorrichtung - im bestimmungsgemäßen Betrieb - in die nicht aktivierte Stellung gelangt, werden die Schaltkontakte SK geöffnet. Dadurch wird ein stromsenkendes Element SBE hinzugeschaltet, bei dem es sich bei der dargestellten und insoweit bevorzugten Vorschaltelektronik um Kondensatoren handelt. Die Senkung des Stroms in der deaktivierten Stellung der Schutzvorrichtung ist möglich, weil die Haltespannung eines Relais im Regelfall deutlich geringer ist als die zum Spalten des Relais benötigte Spannung. Mit der zuvor beschriebenen Vorschaltelektronik kann folglich die Verlustleistungsaufnahme während des bestimmungsgemäßen Betriebs des Leuchtmittels 150 deutlich verringert werden.

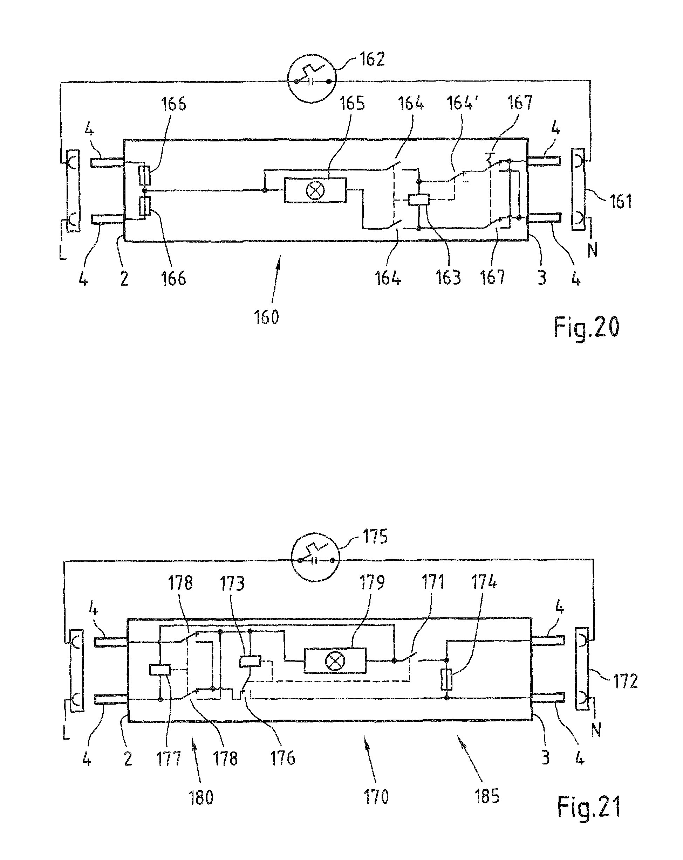

In der Fig. 20 ist ein Leuchtmittel 160 dargestellt, das im in die Fassung 161 eingesetzten Zustand mit der Fassung 161 und dem in der Fassung 161 vorgesehenen Starter 162 einen primären Stromkreis schließt. In dem primären Stromkreis ist ein Sensorelement 163 angeordnet, das nach dem Schließen des primären Stromkreises einen zweipoligen Schalter 164 schließt und einen einpoligen Schalter 164' öffnet. Dadurch wird der primäre Stromkreis geöffnet und der sekundäre Stromkreis, in dem sich die Leuchteinheit 165 befindet, geschlossen. Zudem wird eine Selbsthaltung des sekundären Stromkreises erreicht. Die Kombination von Sensorelement 163 und zweipoligem Schalter 164 ist Bestandteil der Schutzvorrichtung, die den Monteur vor einem elektrischen Schlag im teilmontierten Zustand schützt, da dann der sekundäre Stromkreis durch das Leuchtmittel 160 geöffnet ist.

Durch das Öffnen des primären Stromkreises und/oder durch die Sicherungen 166 wird ein Kurzschluss verhindert, der entstehen könnte, wenn das Leuchtmittel 160 entgegen der Darstellung gemäß Fig. 20 auf dem Kopf stehend in die dort dargestellte Fassung 161 oder in eine anders verdrahtete Fassung eingesetzt werden würde. Es kann auch vorgesehen sein, dass der Kurzschluss zwar nicht verhindert aber die Auswirkung des Kurzschluss jedenfalls begrenzt werden kann.

In dem Fall, dass das Leuchtmittel 160 auf dem Kopf stehend in die Fassung 161 nach Fig. 20 eingesetzt wäre, würde ein Schalten des einpoligen Schalters 164' zu einer Unterbrechung des sekundären Stromkreises führen. Es würde also keine Selbsthaltung des sekundären Stromkreises erreicht, sondern es käme höchstens zu einem Flackern der Leuchteinheit. 165. Diesem Problem könnte jedoch begegnet werden, indem die Umpoleinrichtung 167 zum Umpolen der Kontakte 4 des rechten Kontaktabschnitts 3 in Bezug auf die Leuchteinheit 165 über den mechanischen Schalter 168 aktiviert wird. Dann würde das Leuchtmittel 160 wie in der in Fig. 20 dargestellten Einbaulage funktionieren.

In der Fig. 21 ist ein Leuchtmittel 170 dargestellt, das in einer beliebigen Einbaulage mit den für den Betrieb mit Leuchtstoffröhren vorgesehenen Fassungen (vgl. Fig. 1A bis 1D) betrieben werden kann und dem Monteur beim Einsetzen des Leuchtmittels in die Fassung nicht der Gefahr aussetzt, infolge Spannungsverschleppung von einem Kontaktabschnitt 2,3 zum anderen Kontaktabschnitt 2,3 einen elektrischen Schlag zu erhalten. Eine elektrische Verbindung im nicht vollständig eingesetzten Zustand des Leuchtmittels 170 ist nämlich über den geöffneten, elektrisch zu betätigenden Schalter 171 verhindert.

Das Leuchtmittel 170 bildet zusammen mit der jeweiligen Fassung 172 einen primären Stromkreis, in dem die beiden Kontakte 4 des linken Kontaktabschnitts 2 über das Sensorelement 173 und die beiden Kontakte 4 des rechten Kontaktabschnitts 3 über die Sicherung 174 miteinander verbunden sind. Die beiden Kontaktabschnitte 4 sind im primären Stromkreis über die Fassung 172 und den dort vorgesehenen Starter 175 miteinander verbunden. Die Sicherung 174 ist grundsätzlich auch entbehrlich, wenn das Leuchtmittel 170 lediglich mit Fassungen gemäß den Fig. 1A bis 1D verwendet werden. Ist der primäre Stromkreis mit Einsetzen des Leuchtmittels 170 in die Fassung 172 geschlossen, werden die Schalter 171,176 über das Sensorelement 173 angesteuert. Das Sensorelement 173 und die Schalter 176,171 sind bei dem dargestellten und insoweit bevorzugten Leuchtmittel 170 vorzugsweise in einem Relais zusammengefasst, bei dem es sich vorzugsweise um ein Kleinspannungsrelais mit und ohne Vorschaltelektronik zur Bereitstellung der Kleinspannung zum Betrieb des Kleinspannungsrelais handelt. Das Relais ist Bestandteil der Schutzvorrichtung 185.

Anschließend stehen die beiden Sensorelemente 173,177 unter Spannung. Daher schaltet das Sensorelement 177 die beiden zugehörigen Schalter 178, was zu einem Umpolen der beiden Kontakte 4 des linken Kontaktabschnitts 2 in Bezug auf die Leuchteinheit 179 führt. Das Sensorelement 177 und die Schalter 178 sind beim dargestellten und insoweit bevorzugten Leuchtmittel 170 gemeinsam als Relais ausgeführt und bilden eine Umpoleinrichtung 180. Das Relais kann als ein Kleinspannungsrelais mit und ohne Vorschaltelektronik zur Bereitstellung der Kleinspannung zum Betrieb des Kleinspannungsrelais ausgebildet sein.

Das Umpolen der Kontakte 4 des linken Kontaktabschnitts 2 führt nun dazu, dass die Sensorelemente 173,177 aber nicht mehr der Starter 175 unter Spannung steht. Die Sensorelemente 173,177 halten den sekundären Stromkreis über die Schalter 171,176,178 aufrecht (Selbsthaltung). Dadurch liegt an der Leuchteinheit 179 dauerhaft Spannung an, bis die Fassung 172 spannungsfrei geschaltet oder das Leuchtmittel 170 aus der Fassung 172 entnommen wird. Die Leuchteinheit 179 weist vorzugsweise eine, insbesondere eine Mehrzahl von LED auf.

Wenn das Leuchtmittel 170 in der in Fig. 21 dargestellten Ausrichtung in eine Fassung eingesetzt wird, bei der die linken Kontakte vertauscht sind, also der Starter mit dem linken unteren Fassungskontakt verbunden ist (vgl. Fig. 1D), oder wenn das Leuchtmittel 170 gegenüber der Darstellung gemäß Fig. 21 auf dem Kopf stehend in die dort dargestellte Fassung 172 eingesetzt wird (vgl. Fig. 1B), erfolgt keine Umpolung der Kontakte 4 des linken Kontaktabschnitts 2 des Leuchtmittels 170. Die Schalter 178 und das Sensorelement 177 bleiben inaktiv. Es wird aber dennoch mit Einsetzen des Leuchtmittels 170 zunächst der primäre Stromkreis geschlossen, wie dies zuvor bereits beschrieben wurde. Das Sensorelement 173 schaltet nun den Schalter 171 zum Schließen des sekundären Stromkreises zwischen beiden Kontaktabschnitten 2,3. Nun liegt nicht nur Spannung am Sensorelement 173, sondern auch an der Leuchteinheit 179 an.

Der sekundäre Stromkreis ist selbsthaltend ausgestaltet, ohne dass es einer Umpolung der Kontakte 4 des linken Kontaktabschnitts 2 des Leuchtmittels 170 bedarf. Das Leuchtmittel 170 ist also in allen gängigen Fassungen für Leuchtstoffröhren zu betreiben (vgl. Fig. 1A bis 1D), ohne dass der Monteur der Gefahr eines Stromschlags ausgesetzt ist, ohne dass ein kritischer Betriebszustand entstehen kann und ohne dass der Monteur eingreifen muss, um die interne Verschaltung des Leuchtmittels 170 an die verwendete Fassung oder die Einbaulage des Leuchtmittels 170 anzupassen.

Selbst wenn das Leuchtmittel 170 mit einer Fassung betrieben wird, an der die Netzspannung an den beiden Kontakten einer Seite der Fassung abfällt, kann kein kritischer Betriebszustand in Form eines Kurzschlusses entstehen, da in der Brücke zwischen den rechten Kontakten 4 eine Sicherung 174 vorgesehen ist und sich die Kontakte 4 des linken Kontaktabschnitts 2 nicht niederohmig verbinden lassen.

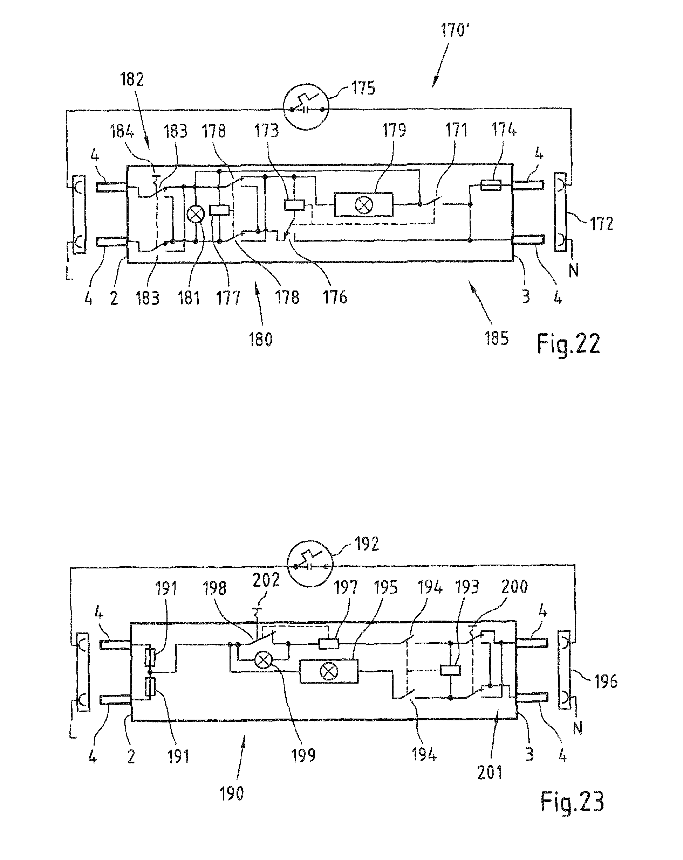

Das in der Fig. 22 dargestellte Leuchtmittel 170' basiert auf dem in der Fig. 21 dargestellten Leuchtmittel 170. Zusätzlich ist jedoch noch eine weitere, mechanisch über eine Auslöseeinrichtung 184 etwa in Form eines Tasters oder dergleichen zu betätigende Umpoleinrichtung 182, umfassend den zweipoligen Schalter 183, zum Umpolen der Kontakte 4 des linken Kontaktabschnitts 2 in Bezug auf die Leuchteinheit 179 vorgesehen. Ferner ist ein Signalgeber 181 parallel zu dem Sensorelement 177 geschaltet, bei dem es sich beim dargestellten und insoweit bevorzugten Leuchtmittel um eine vorzugsweise farbige LED handelt. Es wären aber auch andere optische oder akustische Signalgeber denkbar.

Bei der dargestellten Einbaulage liegt beim Einsetzen des Leuchtmittels 170 in die Fassung an dem in dem ersten Stromkreis angeordneten Sensorelement 173 Spannung an. Daraufhin werden die Schalter 171,176 von dem Sensorelement 173 umgelegt. Nun stehen beide Sensorelemente 173,177 unter Spannung und das Sensorelement 177 schaltet die Schalter 178 zum Umpolen der Kontakte 4 des linken Kontaktabschnitts 2 in Bezug auf die Leuchteinheit 179. Es leuchtet dann neben der Leuchteinheit 179 auch die LED 181, um dem Monteur anzuzeigen, dass in entsprechendem Betriebszustand beide Sensoren 173,177 als Verbraucher in den Stromkreis geschaltet sind.

Um Energie einzusparen bzw. die Verluste gering zu halten, kann der Monteur nun den vorzugsweise im in die Fassung eingebauten Zustand des Leuchtmittels 170 von außen zugängliche Auslöseeinrichtung 184 betätigen bekannter Art und so die dem Schalter 184 zugeordnete weitere Umpoleinrichtung 182 aktivieren. Es werden so die Kontakte 4 des linken Kontaktabschnitts 2 erneut gegenüber der Leuchteinheit 179 vertauscht. Sodann liegt an dem Sensorelement 177 keine Spannung mehr an und der entsprechende elektrische Verlust wird eingespart, ohne dass dies den Betrieb der Leuchteinheit 179 beeinträchtigen würde, da an dem Sensorelement 173 noch Spannung anliegt, so dass eine Selbsthaltung des sekundären Stromkreises erreicht wird, die dafür sorgt, dass an der Leuchteinheit 179 dauerhaft Spannung anliegt.

Der Schalter 182 ist im eingebauten Zustand des Leuchtmittels 170' leicht zugänglich. Damit wird vermieden, dass das Leuchtmittel 170' zum Betätigen des Schalters aus der Fassung entnommen werden muss.

In der Fig. 23 ist ein Leuchtmittel 190 dargestellt, das einerseits eine Spannungsverschleppung zwischen den Kontaktabschnitten 2,3 vermeidet und andererseits eine nachteilige Einbaulage anzeigt, ohne dass es zu einer Beschädigung des Leuchtmittels 190 oder einem kritischen Betriebszustand in der Fassung kommt. In der in Fig. 23 dargestellten Einbaulage wird durch Einsetzen des Leuchtmittels 190 ein primärer Stromkreis geschlossen, der die beiden Sicherungen 191, den Starter 192 und das Sensorelement 193 mit einbezieht. Das Sensorelement 193 schaltet nun die zugeordneten Schalter 194, welche bei dem dargestellten und insoweit bevorzugten Leuchtmittel 190 mit dem Sensorelement 173 in einem Relais, bedarfsweise Halbleiterrelais und/oder Kleinspannungsrelais, zusammengefasst sind. Es wird somit der sekundäre Stromkreis erst im eingesetzten Zustand des Leuchtmittels 190 geschlossen und die Leuchteinheit 195 betrieben. Mithin sind das Sensorelement 193 und die Schalter 194 bzw. der zweipolige Schalter 194 Teil der Schutzvorrichtung, welche die Gefahr für den Monteur, einen Stromschlag zu erhalten, verhindert.

In dem Fall, dass das Leuchtmitteln 190 entgegen der Darstellung gemäß Fig. 23 auf dem Kopf stehend in die Fassung 196 eingesetzt wäre oder die beiden rechten Kontakte der Fassung 196 gegeneinander vertauscht wären, ist der parallel zur Leuchteinheit 195 fließende Strom deutlich höher als der durch die Leuchteinheit 195 fließende Strom. Dies ist nachteilig und führt zum Auslösen eines Sensorelements 197 in Form einer Messelektronik oder eines Thermoschalters. Dadurch wird ein Schalter 198 geöffnet und ein Signalelement 199 aktiviert, das die nachteilige Verschaltung anzeigt. Der Monteur kann nun über einen Schalter 200 oder eine andere Einrichtung eine Umpoleinrichtung 201 zum Umpolen der Kontakte 4 des rechten Kontaktabschnitts 3 in Bezug auf die Leuchteinheit 195 betätigen. Der nachteilige Betriebszustand ist behoben und der Signalgeber 199 kann über eine entsprechende Rücksetzeinrichtung 202 wieder in seine Ausgangsposition zurückgesetzt werden.

Die Rücksetzeinrichtung 202 ist so ausgebildet und vorgesehen, dass die Rücksetzeinrichtung 202 ohne weiteres von außen zugänglich ist, wenn das Leuchtmittel 190 in die Fassung 196 eingesetzt ist.

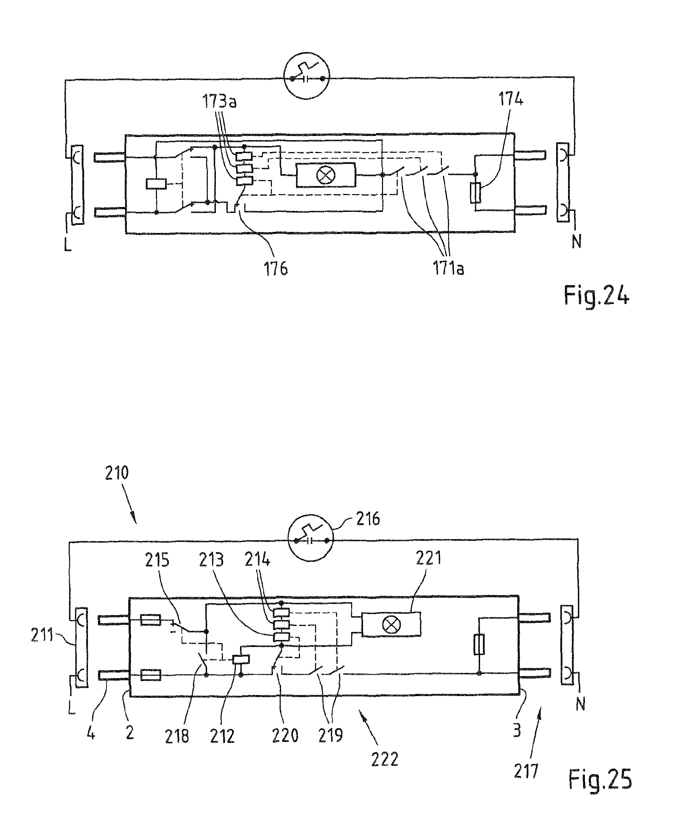

In der Fig. 24 ist eine Abwandlung des Leuchtmittels 170 aus Fig. 21 dargestellt. Gleiche Bauteile sind dabei mit gleichen Bezugszeichen gekennzeichnet. Im Unterschied zu dem in Fig. 21 dargestellten Leuchtmittel 170 ist das Sensorelement 173 durch die drei Sensorelemente 173a ersetzt worden. Ferner ist der elektrisch zu betätigende Schalter 171 durch die drei Schalter 171a ersetzt worden, um die Spannungsfestigkeit der Schaltung zu erhöhen. Ferner wurde die Verschaltung so abgewandelt, dass auf den Knoten zwischen der Sicherung 174, dem Kontakt 4 und dem Schalter 176 verzichtet wurde. In Gegensatz dazu existiert nun eine direkte elektrische Verbindung zwischen den Schaltern 176 und 171a. Auf diese Weise kann die insgesamt erforderliche Zahl von Schaltern zur Absicherung der geforderten Spannungsfestigkeit vermindert werden. Im vorliegenden Fall sind zwei Schalter in der Verbindung zwischen dem Schalter 176 und der Sicherung 174 eingespart worden. Hohe Spannungsfestigkeiten können grundsätzlich durch die Verwendung von sogenannten Reedrelais begünstigt werden. Andere Sensorelemente sind aber dennoch möglich.

Durch die Mehrzahl von Schaltern 171a kann zudem mit sehr hoher Wahrscheinlichkeit sichergestellt werden, dass sich die Schutzvorrichtung von der deaktivierten Stellung wieder in die aktivierte Stellung überführen lässt, um den Benutzer erneut vor einem versehentlichen Stromschlag zu schützen. Selbst wenn einer der Schalter 171a infolge eines Klebens der entsprechenden Kontakte nicht mehr öffnen sollte, kann die Schutzvorrichtung durch das Öffnen eines anderen Schalters 171a wieder die aktivierte Stellung einnehmen. Dadurch kann zwar die Spannungsfestigkeit in der aktivierten Stellung der Schutzvorrichtung herabgesetzt werden. Dies kann aber bei geeigneter Auslegung der Schutzvorrichtung, beispielsweise durch Verwendung eines weiteren Schalters, kompensiert werden. Sollte die Spannungsfestigkeit keinen limitierenden Faktor darstellen, dürften zwei in Reihe angeordnete Schalter ausreichend sein, da ein Kleben von Schaltern bei der zu erwartenden Lebensdauer des Leuchtmittels unwahrscheinlich ist.

In Abwandlung zu dem in Fig. 24 dargestellten Leuchtmittel könnten die Sensorelemente 173a auch parallel zueinander geschaltet werden, was jedoch weniger bevorzugt ist, weil dann der Strom auf die Sensorelemente 173a aufgeteilt werden muss. Alternativ können die Sensorelemente 173a auch durch ein einziges Sensorelement ersetz werden. Wenn lediglich Fehlfunktionen durch das Kleben der Kontakte der Schalter 171a, also etwa das Verschweißen der Kontakte miteinander unter Ausbildung eine dauerhaften elektrischen Verbindung, verhindert werden sollen, sollte es ausreichend sein, zwei Schalter 171a vorzusehen, die über ein einziges Sensorelement 173a geschaltet werden.

In der Fig. 25 ist ein Leuchtmittel 210 dargestellt, das eine weitere Abwandlung des Leuchtmittels 170 aus Fig. 21 darstellt. Nach dem Einsetzen des Leuchtmittels 210 in eine korrespondierende Fassung 211 wird der Strompfad von dem an Spannung angeschlossenen Kontakt L über den Kontakt 4, das Sensorelement 212, die Sensorelemente 213,214, den Schalter 215, den Starter 216 und den gebrückten Kontaktabschnitt 217 der gegenüberliegenden Seite zum geerdeten Kontakt N geschlossen. Infolgedessen werden die Sensorelemente 212,213,214 stromdurchflossen und es schließen sich die Schalter 218,219 während der als Wechsler ausgebildete Schalter 220 umgeschaltet und der Schalter 215 geöffnet wird. Nun fließt der Strom vom stromführenden Kontakt L über den Schalter 218, parallel über die Leuchteinheit 221 und die Sensorelemente 213,214, über den Umschalter 220 und die Schalter 219 zum geerdeten Kontakt N. Das Sensorelement 212 bleibt weiter stromdurchflossen und verharrt in Selbsthaltung.

Erst über die Schalter 219 der Schutzvorrichtung 222 werden die Kontaktabschnitte 2,3 elektrisch über das Leuchtmittel 210 verbunden. Infolge der in Reihe angeordneten Schalter 219,220 wird die Spannungsfestigkeit, beim dargestellten und insoweit bevorzugten Leuchtmittel auf 3 kV erhöht.

Nicht dargestellt ist, dass die Sensorelemente 213,214 auch parallel, insbesondere jeweils parallel zur Leuchteinheit 221 vorgesehen sein können. In der Brücke des rechten Kontaktabschnitts 217 ist eine Sicherung zur Vermeidung einer seitenimmanenten Spannungsverschleppung vorgesehen.

Wird das Leuchtmittel 210 in auf dem Kopf stehender Ausrichtung in die Fassung 211 eingesetzt, so wird in analoger Weise ein Strompfad über den Starter 216 geschlossen, wie dies bereits zuvor beschrieben worden ist. Die Sensorelemente 213,214 würden dann den Schalter 220 umschalten und die Schalter 219 schließen. Das Sensorelement 212 wird in dieser Einbaulage im Vergleich zu der in Fig. 25 dargestellten Einbaulage von einem geringeren Strom durchflossen, wenn die in Reihe angeordneten Schalter 220,219, den elektrischen Kontakt zum rechten Kontaktabschnitt 3 geschlossen haben. Die über das Sensorelement 212 angesteuerten Schalter 215,218 werden in dieser Einbaulage daher nicht betätigt. Um eine Seitenimmanente Spannungsverschleppung am rechten Kontaktabschnitt 3 sicher zu verhindern, ist dort eine weitere Sicherung vorgesehen.

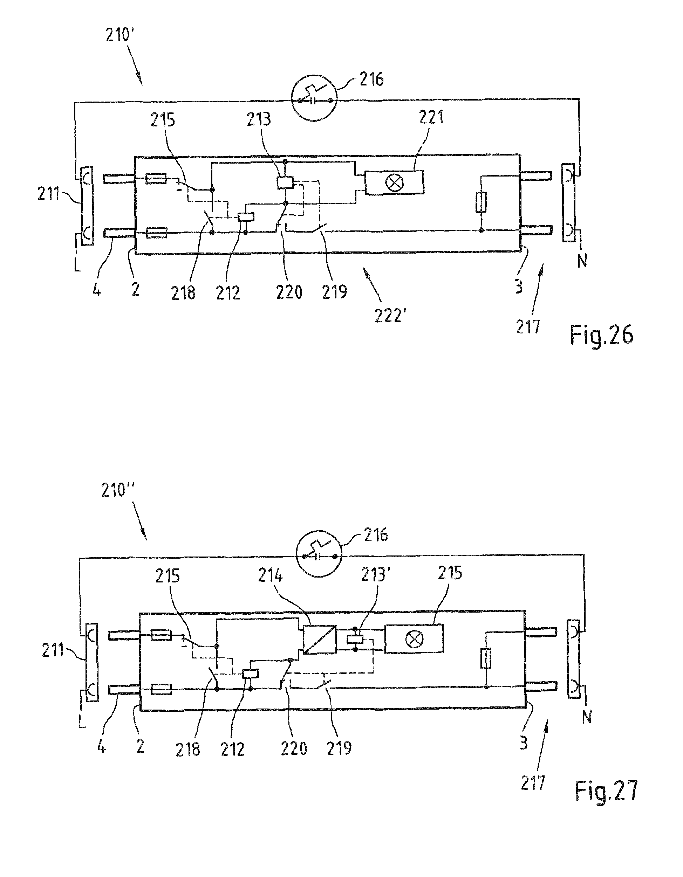

Bei dem in der Fig. 26 dargestellten Leuchtmittel 210' handelt es sich um eine Abwandlung des Leuchtmittels 210 aus der Fig. 25. Die grundsätzliche Funktion der Leuchtmittel 210,210' hinsichtlich des Schutzes gegenüber eines Stromschlags und der hierfür vorgesehenen Schutzvorrichtungen 222,222' ist vergleichbar. Bei dem in Fig. 26 dargestellten Leuchtmittel 210' werden allerdings der Schalter 219 und die zwei Sensorelemente 214 des Leuchtmittels 210 der Fig. 25 eingespart. Dies kann zwar je nach der Auswahl der übrigen Bauelemente des Leuchtmittels 210' zu einer verringerten Spannungsfestigkeit der Schutzvorrichtung führen. Diesem kann jedoch durch geeignete Maßnahmen begegnet werden.

Unabhängig von der Frage der Spannungsfestigkeit der Schutzvorrichtung kann bei dem in der Fig. 26 dargestellten Leuchtmittel 210' toleriert werden, dass ein Schalter 219,220 222', beispielsweise durch häufiges Schalten, infolge eines Verklebens der entsprechenden Kontakte dauerhaft geschlossen bleibt und auch beim Entfernen des Leuchtmittels 210' aus der Fassung 211 nicht mehr in seinen Ursprungszustand zurückkehrt. Auch wenn dieser Fall eintritt, ist ein weiterer Schalter 219,220 vorgesehen, der ausreicht, um die Schutzvorrichtung 222' in eine aktivierte Stellung zu bringen, auch wenn diese nicht identisch mit der ursprünglichen aktivierten Stellung der Schutzvorrichtung 222' ohne den klebenden Schalter 219,220 ist. Dabei ist es grundsätzlich egal, ob der Schalter 219 oder der als Umschalter ausgebildete Schalter 220 in der Position kleben bleibt, die der jeweilige Schalter 219,220 in der deaktivierten Stellung der Schutzvorrichtung 222' einnimmt.

Bei dem in der Fig. 27 dargestellten Leuchtmittel 210" handelt es sich um eine Abwandlung des Leuchtmittels 210' aus der Fig. 26. Bei dem Leuchtmittel 210" ist das Sensorelement 213' als Teil eines Kleinspannungsrelais ausgebildet und einer Treiberelektronik 214 nachgeschaltet, welche die Licht emittierenden LEDs 215 mit Spannung versorgt. In diesem Falle handelt es sich um eine Gleichspannung, die geeignet ist und ausgenutzt werden kann, um das Sensorelement 213' anzusteuern, ohne hierzu eine zusätzliche Vorschaltelektronik vorsehen zu müssen. Die Treiberelektronik und die LEDs sind bei dem Leuchtmittel 210' aus der Fig. 26 der Einfachheit halber zum Leuchtmittel 221 zusammengefasst.

## Patentansprüche

1. Leuchtmittel (110, 160,170,170',190,210,210',210") mit einer Leuchteinheit (116,136, 165, 179,195,221), wenigstens zwei separaten Kontaktabschnitten (2,3) und einer elektrischen Verbindung zwischen der Leuchteinheit (116, 165,179,195,221) und den Kontaktabschnitten (2,3), wobei jeder Kontaktabschnitt (2,3) wenigstens einen elektrischen Kontakt (4) zur Verbindung mit einer korrespondierenden Fassung (114, 161,172,196,211) aufweist, **dadurch gekennzeichnet, dass** wenigstens eine elektrisch deaktivierbare Schutzvorrichtung (111,185,222,222') zur Verhinderung eines Stromschlags an wenigstens einem der elektrischen Kontakte(4) in einem teilmontierten Zustand des Leuchtmittels (110, 160,170,170',190,210,210',210 ") in einer korrespondierenden Fassung (101, 114, ,161,172,196,211) vorgesehen ist, dass die Schutzvorrichtung (111,185,222,222') dazu ausgebildet ist, im montierten Zustand des Leuchtmittels (110, 160,170,170',190,210,210',210") eine deaktivierte Stellung und im demontierten Zustand des Leuchtmittels (110, 160,170,170',190,210,210',210") eine aktivierte Stellung einzunehmen, dass
die Schutzvorrichtung (111,185,222,222') wenigstens einen elektrisch zu betätigenden Schalter (112, 164,171,171a,194,219,220) und wenigstens ein Sensorelement (113, 163,173,173a,193,213,213') in Form eines Relais aufweist und wobei das Sensorelement (113, 163,173,173a,193,213,213') so in einem primären Stromkreis vorgesehen ist, dass das Sensorelement (113, 163,173,173a,193,213,213') im montierten Zustand des Leuchtmittels (110,,160,170,190,210,210') mit Strom durchflossen wird und so den elektrisch zu betätigenden und in einem sekundären Stromkreis angeordneten Schalter (112,164,171,171a,194,219) zum Schließen des sekundären Stromkreises schließt, dass wenigstens ein Relais zur Selbsthaltung des die Leuchteinheit (116,136,165,179,195,221) aufweisenden sekundären Stromkreises vorgesehen ist und dass wenigstens ein elektrisch zu betätigender Schalter (112,164',176,194,215) zum Öffnen des primären Stromkreises bei gleichzeitig schließendem oder geschlossenem sekundären Strömkreis vorgesehen ist.

2. Leuchtmittel nach Anspruch 1,
**dadurch gekennzeichnet, dass** das Relais ein Kleinspannungsrelais und/oder ein Halbleiterrelais ist.

3. Leuchtmittel nach Anspruch 2,
**dadurch gekennzeichnet, dass** das eine Mehrzahl von elektrisch zu betätigenden Schaltern (171a,219,220) in Reihe geschaltet sind und von wenigstens einem, insbesondere im primären Stromkreis vorgesehenen, Sensorelemente (173a,213,214) geschlossen werden können.

4. Leuchtmittel nach einem der Ansprüche 1 bis 3,
**dadurch gekennzeichnet, dass** wenigstens eine Messeinrichtung zur Ermittlung des Spannungsabfalls zwischen wenigstens zwei Kontakten (4) des Leuchtmittels vorgesehen ist, dass wenigstens ein Schalter zur Verschaltung wenigstens eines Kontakts (4) mit der mit der Leuchteinheit in Abhängigkeit des ermittelten Spannungsabfalls vorgesehen ist und vorzugsweise der wenigstens eine Schalter ein elektrisch zu betätigender Schalter ist und die Messeinrichtung und der Schalter so gekoppelt sind, dass der Schalter in Abhängigkeit des ermittelten Spannungsabfalls automatisch geschaltet wird.

5. Leuchtmittel nach einem der Ansprüche 1 bis 4,
**dadurch gekennzeichnet, dass** die Schutzvorrichtung (111,185,222,222') einen bei Demontage des Leuchtmittels (110,160,170,190,210,210') automatisch betätigten, insbesondere federbelasteten, Rückstellmechanismus zum Überführen der Schutzvorrichtung (111,185,222,222') in die aktivierte Stellung aufweist.

6. Leuchtmittel nach einem der Ansprüche 1 bis 5,
**dadurch gekennzeichnet, dass** zwischen zwei Kontakten (4) eines Kontaktabschnitts (2) und der Leuchteinheit ein elektrisch zu betätigender Schalter vorgesehen ist, um die Leuchteinheit wahlweise mit einem der beiden Kontakte (4) des Kontaktabschnitts (2) zu verbinden.

7. Leuchtmittel nach einem der Ansprüche 1 bis 6,
**dadurch gekennzeichnet, dass** zwischen zwei Kontakten (4) eines Kontaktabschnitt (2) und der Leuchteinheit (179) eine Umpoleinrichtung (180,182) zum Umpolen der Kontakte (4) des einen Kontaktabschnitts (2) in Bezug auf die Leuchteinheit (179) vorgesehen ist und dass vorzugsweise ein Sensorelement (177) vorgesehen ist, das die Umpoleinrichtung (180) bei einer vorbestimmten nicht bevorzugten Verschaltung des Leuchtmittels (179) mit der Fassung (172) automatisch zur Umpolung der Kontakte (4) des einen Kontaktabschnitts (2) in Bezug auf die Leuchteinheit (179) ansteuert.

8. Leuchtmittel nach Anspruch 7,
**dadurch gekennzeichnet, dass** eine von außen zugängliche, mechanisch zu betätigende Auslöseeinrichtung (182) zum Betätigen der Umpoleinrichtung (183) vorgesehen ist.

9. Leuchtmittel nach einem der Ansprüche 1 bis 8,
**dadurch gekennzeichnet, dass** ein, vorzugsweise optischer und/oder akustischer, Signalgeber (181,199) vorgesehen ist und dass der Signalgeber (181,199) so vorgesehen ist, dass der Signalgeber (181,199) bei einer vorbestimmten nicht bevorzugten Verschaltung des Leuchtmittels (170,190) oder bei einer vorbestimmten bevorzugten Verschaltung des Leuchtmittels (170,190) oder einer vorbestimmten bevorzugten Verschaltung des Leuchtmittels (170,190) mit der Fassung aktiv ist.

10. Leuchtmittel nach Anspruch 9,
**dadurch gekennzeichnet, dass** der Signalgeber (199) mit einem Sensorelement (197)und einer Schalteinheit gekoppelt ist, so dass das Sensorelement (197) in einem vorbestimmten Betriebszustand die Schalteinheit (198) zur Aktivierung des Signalgebers (199)ansteuert und dass vorzugsweise die mit dem Signalgeber (199) gekoppelte Schalteinheit (198) rücksetzbar ausgebildet und/oder mit einem Rücksetzer (202) gekoppelt ist, um die Schalteinheit (198) zurückzusetzen.

11. Leuchtmittel nach einem der Ansprüche 1 bis 10,
**dadurch gekennzeichnet, dass** wenigstens ein Sensorelement (177) so vorgesehen ist, dass es bei einer ersten vorbestimmten Verschaltung des Leuchtmittels (170) mit der Fassung (172) der Leuchte zu einem elektrischen Verlust und bei einer zweiten vorbestimmten Verschaltung des Leuchtmittels (170) mit der Fassung (172) der Leuchte zu keinem oder einem geringeren elektrischen Verlust führt, und dass ein Signalgeber (181) so vorgesehen ist, dass er in der ersten vorbestimmten Verschaltung oder in der zweiten vorbestimmten Verschaltung oder der zweiten vorbestimmten Verschaltung aktiv ist.

12. Leuchtmittel nach einem der Ansprüche 1 bis 11,
**dadurch gekennzeichnet, dass** die Schutzvorrichtung (111,185,222,222') derart ausgebildet ist, dass im teilmontierten Zustand die Berührungsspannung an einem der Schutzvorrichtung (111,185,222,222') zugeordneten elektrischen Kontakt einen Wert von 50 Volt (AC) und/oder 120 Volt (DC), insbesondere unterhalb von 25 Volt (AC) und/oder 60 Volt (DC), unterschreitet und/oder dass das Leuchtmittel (110, 160,170,170',190,210,210') röhrenförmig, vorzugsweise zum Austausch von Leuchtstoffröhren, insbesondere vom Typ T4, T5, T8, T10 und T12, und/oder zur Aufnahme in einem Röhrensockel, insbesondere vom Typ G5 oder G13, ausgebildet ist.

13. System (100) umfassend ein Leuchtmittel (110, 160,170,170',190,210,210') und eine Fassung (101,114, 161,172,,196,211) wobei das Leuchtmittel (110, 160,170,170',190,210,210') zum Betrieb in der Fassung (101,114, 161,172,196,211) korrespondierend zur Fassung (101,114,161,172,196,211) ausgebildet ist, **dadurch gekennzeichnet, dass** das Leuchtmittel (110, 160,170,170',190,210,210') nach einem der Ansprüche 1 bis 13 ausgebildet ist und dass die Schutzvorrichtung (111,185,222,222') im in der Fassung (74, 101,114,161,172,196,211) montiertem Zustand des Leuchtmittels (110, 160,170,170',190,210,210') zwangsweise deaktiviert und im demontierten Zustand aktiviert ist.

14. System nach Anspruch 13,
**dadurch gekennzeichnet, dass** die Fassung (101,114, 161,172,196,211) der Leuchte (102) zum Betrieb mit Leuchtstoffröhren geeignet ist.

## Claims

1. Lighting means (110, 160, 170, 170', 190, 210, 210', 210") comprising a light-emitting unit (116, 136, 165, 179, 195, 221), at least two separate contact modules (2, 3) and an electrical connection between the light-emitting unit (116, 165, 179, 195, 221) and the contact modules (2, 3), wherein each contact module (2, 3) has at least one electrical contact (4) for connection with a corresponding light-emitting holder (114, 161, 172, 196, 211), **characterised in that** at least one protective device (111, 185, 222, 222') for prevention of electric shock of at least one of the electrical contacts (4) in a partially assembled state of the lighting means (110, 160, 170, 170', 190, 210, 210', 210") in a corresponding lampholder (101, 114, 161, 172, 196, 211) that can be deactivated electrically is provided, and that the protective device (111, 185, 222, 222') is designed to assume a deactivated position in the assembled state of the lighting means (110, 160, 170, 170', 190, 210, 210', 210") and an activated position in the dismantled state of the lighting means (110, 160, 170, 170', 190, 210, 210', 210"), that the protective device (111, 185, 222, 222') has at least one electrically operable switch (112, 164, 171, 171a, 194, 219, 220) and at least one sensor element (113, 163, 173, 173a, 193, 213, 213') designed in the form of a relay and wherein the sensor element (113, 163, 173, 173a, 193, 213, 213') is provided in a primary circuit in such a way that the sensor element (113, 163, 173, 173a, 193, 213, 213') in the assembled state of the lighting means (110, 160, 170, 170', 190, 210, 210', 210") has current flowing through it and thus closes the electrically operable switch (112, 164, 171, 171a, 194, 219) arranged in a secondary circuit for closing the secondary circuit, **in that** at least one relay is provided for locking the secondary electric circuit of the light-emitting unit (116, 136, 165, 179, 195, 221), and that at least one electrically operable switch (112, 164', 176, 194, 215) is provided for opening the primary circuit while the secondary circuit is closing or when it has closed.

2. Lighting means according to claim 1, **characterised in that** the relay is a low voltage relay and/or a semiconductor relay.

3. Lighting means according to claim 2, **characterised in that** a plurality of electrically operable switches (171a, 219, 220) are connected in series and can be closed by at least one sensor element (173a, 213, 214) more particularly, provided in the primary circuit.

4. Lighting means according to any one of claims 1 to 3, **characterised in that** at least one measuring device is provided for determining the voltage drop between at least two contacts (4) of the lighting means, **in that** at least one switch is provided for interconnection of least one contact (4) with the light-emitting unit as a function of the voltage drop found and preferably the at least one switch is an electrically operable switch and the measuring device and the switch are coupled so that the switch is switched automatically depending on the voltage drop found.

5. Lighting means according to any one of claims 1 to 4, **characterised in that** the protective device (111, 185, 222, 222') has an automatically actuated, more particularly spring-loaded, reset mechanism, during dismantling of the lighting means (110, 160, 170, 190, 210, 210') for transferring the protective device (111, 185, 222, 222') to the activated position.

6. Lighting means according to any one of claims 1 to 5, **characterised in that** an electrically operable switch is provided between two contacts (4) of a contact module (2) and of the light-emitting unit to connect the light-emitting unit optionally with one of the two contacts (4) of the contact module (2).

7. Lighting means according to any one of claims 1 to 6, **characterised in that** between two contacts (4) of a contact module (2) and the light-emitting unit (179), a polarity-reversing device (180, 182) for reversing the polarity of the contacts (4) of the one contact module (2) relative to the light-emitting unit (179) is provided and that preferably a sensor element (177) is provided, which controls the polarity-reversing device (180) in a predetermined, non-preferred interconnection of the lighting means (179) with the lampholder (172) automatically for reversing the polarity of the contacts (4) of the one contact segment (2) relative to the light-emitting unit (179).

8. Lighting means according to claim 7, **characterised in that** an externally accessible, mechanically operable tripping mechanism (182) is provided for actuating the polarity-reversing device (183).

9. Lighting means according to any one of claims 1 to 8, **characterised in that** one, preferably optical and/or acoustic signal generator (181, 199) is provided and that the signal generator (181, 199) is arranged so that the signal generator (181, 199) is active with a predetermined, non-preferred, interconnection of the lighting means (170, 190) or a predetermined preferred interconnection of the lighting means (170, 190) or a predetermined preferred interconnection of the lighting means (170, 190) with the lampholder.

10. Lighting means according to claim 9, **characterised in that** the signal generator (199) is connected to a sensor element (197) and a switching unit, so that in a predetermined operating state, the sensor element (197) controls the switching unit (198) for activation of the signal generator (199) and that preferably the switching unit (198) connected to the signal generator (199) is of resettable design and/or is coupled to resetter (202) for resetting the switching unit (198).

11. Lighting means according to any one of claims 1 to 10, **characterised in that** at least one sensor element (177) is arranged so that, with a first predetermined interconnection of the lighting means (170) with the lampholder (172) of the luminaire it leads to a power loss and with a second predetermined interconnection of the lighting means (170) with the lampholder (172) of the luminaire it leads to no or a smaller power loss, and **in that** a signal generator (181) is arranged so that it is active in the first predetermined interconnection or in the second predetermined interconnection or the second predetermined interconnection.

12. Lighting means according to any one of claims 1 to 11, **characterised in that** the protective device (111, 185, 222, 222') is designed so that in the partially assembled state, the contact voltage on an electrical contact assigned to the protective device (111, 185, 222, 222') is below a value of 50 V (AC) and/or 120 V (DC), more particularly below 25 V (AC) and/or 60 V (DC), and/or that the lighting means (110, 160, 170, 170',190, 210, 210') is of tubular design, preferably for the replacement of fluorescent tubes, more particularly of type T4, T5, T8, T10 and T12, and/or for insertion into a tube socket, more particularly of type G5 or G13.

13. System (100) comprising a lighting means (110, 160, 170, 170', 190, 210, 210') and a lampholder (101, 114, 161, 172, 196, 211) wherein the lighting means (110, 160, 170, 170', 190, 210, 210') for operation in the lampholder (101, 114, 161, 172, 196, 211) is designed according to the lampholder (101, 114, 161, 172, 196, 211), **characterised in that** the lighting means (110, 160, 170, 170', 190, 210, 210') is configured according to any one of claims 1 to 13 and that the protective device (111, 185, 222, 222') in the state of the lighting means (110, 160, 170, 170',190, 210, 210') assembled in the lampholder (74, 101, 114, 161, 172, 196, 211) is forcibly deactivated, and in the dismantled state is activated.

14. System according to claim 13, **characterised in that** the lampholder (101, 114, 161, 172, 196, 211) of the luminaire (102) is suitable for operation with fluorescent tubes.

## Revendications

1. Moyen d'éclairage (110, 160, 170, 170', 190, 210, 210', 210") comprenant une unité d'éclairage (116, 136, 165, 179, 195, 221), au moins deux tronçons de contact (2, 3) séparés et une liaison électrique entre l'unité d'éclairage (116, 165, 179, 195, 221) et les tronçons de contact (2, 3), sachant que chaque tronçon de contact (2, 3) présente au moins un contact électrique (4) pour la liaison à une douille (114, 161, 172, 196, 211) correspondante, **caractérisé en ce qu'**au moins un dispositif de protection (111, 185, 222, 222') pouvant être désactivé électriquement est prévu pour empêcher une décharge électrique sur au moins un des contacts électriques (4) dans un état partiellement monté du moyen d'éclairage (110, 160, 170, 170', 190, 210, 210', 210") dans une douille (101, 114, 161, 172, 196, 211) correspondante, que le dispositif de protection (111, 185, 222, 222') est conçu pour adopter une position désactivée lorsque le moyen d'éclairage (110, 160, 170, 170', 190, 210, 210', 210") est monté et une position activée lorsque le moyen d'éclairage (110, 160, 170, 170', 190, 210, 210', 210") est démonté, que le dispositif de protection (111, 185, 222, 222') présente au moins un commutateur (112, 164, 171, 171a, 194, 219, 220) à actionnement électrique et au moins un élément de capteur (113, 163, 173, 173a, 193, 213, 213') sous forme d'un relais, et sachant que l'élément de capteur (113, 163, 173, 173a, 193, 213, 213') est ainsi prévu dans un circuit électrique primaire que l'élément de capteur (113, 163, 173, 173a, 193, 213, 213') est traversé par du courant lorsque le moyen d'éclairage (110, 160, 170, 190, 210, 210') est monté et ferme ainsi le commutateur (112, 164, 171, 171a, 194, 219) à actionnement électrique et disposé dans un circuit électrique secondaire pour fermer le circuit électrique secondaire, qu'au moins un relais d'auto-entretien du circuit électrique secondaire présentant l'unité d'éclairage (116, 136, 165, 179, 195, 221) est prévu, et qu'au moins un commutateur (112, 164', 176, 194, 215) à actionnement électrique est prévu pour ouvrir le circuit électrique primaire lorsque le circuit électrique secondaire se ferme simultanément ou est fermé.

2. Moyen d'éclairage selon la revendication 1, **caractérisé en ce que** le relais est un relais très basse tension et/ou un relais semi-conducteur.

3. Moyen d'éclairage selon la revendication 2, **caractérisé en ce que** l'une pluralité de commutateurs (171a, 219, 220) à actionnement électrique sont montés en série et peuvent être fermés par au moins un élément de capteur (173a, 213, 214) prévu en particulier dans le circuit électrique primaire.

4. Moyen d'éclairage selon l'une des revendications 1 à 3, **caractérisé en ce qu'**au moins un dispositif de mesure est prévu pour calculer la chute de tension entre aux moins deux contacts (4) du moyen d'éclairage, qu'au moins un commutateur pour relier au moins un contact (4) avec l'unité d'éclairage en fonction de la chute de tension calculée est prévu, et de préférence, l'au moins un commutateur est un commutateur à actionnement électrique et le dispositif de mesure et le commutateur sont ainsi couplés que le commutateur est commuté automatiquement en fonction de la chute de tension calculée.

5. Moyen d'éclairage selon l'une des revendications 1 à 4, **caractérisé en ce que** le dispositif de protection (111, 185, 222, 222') présente un mécanisme de rappel actionné automatiquement, en particulier contraint par ressort, lors du démontage du moyen d'éclairage (110, 160, 170, 190, 210, 210') pour faire passer le dispositif de protection (111, 185, 222, 222') dans la position activée.

6. Moyen d'éclairage selon l'une des revendications 1 à 5, **caractérisé en ce qu'**entre deux contacts (4) d'un tronçon de contact (2) et l'unité d'éclairage est prévu un commutateur à actionnement électrique, pour relier l'unité d'éclairage au choix avec un des deux contacts (4) du tronçon de contact (2).

7. Moyen d'éclairage selon l'une des revendications 1 à 6, **caractérisé en ce qu'**entre deux contacts (4) d'un tronçon de contact (2) et l'unité d'éclairage (179) est prévu un dispositif d'inversion de polarité (180, 182) pour inverser la polarité des contacts (4) de l'un tronçon de contact (2) par rapport à l'unité d'éclairage (179) et que de préférence, un élément de capteur (177) est prévu, qui commande automatiquement le dispositif d'inversion de polarité (180), en cas de connexion non préférée prédéterminée de l'unité d'éclairage (179) avec la douille (172), pour inverser la polarité des contacts (4) de l'un tronçon de contact (2) par rapport à l'unité d'éclairage (179).

8. Moyen d'éclairage selon la revendication 7, **caractérisé en ce qu'**un dispositif d'actionnement (182) accessible de l'extérieur, à actionnement mécanique, est prévu pour actionner le dispositif d'inversion des pôles (183).

9. Moyen d'éclairage selon l'une des revendications 1 à 8, **caractérisé en ce qu'**un générateur de signal (181, 199) optique et/ou acoustique est prévu et que le générateur de signal (181, 199) est ainsi prévu que le générateur de signal (181, 199) est actif lors d'un connexion non préférée prédéterminée du moyen d'éclairage (170, 190) ou d'un connexion préférée prédéterminée du moyen d'éclairage (170, 190) ou d'un connexion préférée prédéterminée du moyen d'éclairage (170, 190) avec la douille.

10. Moyen d'éclairage selon la revendication 9, **caractérisé en ce que** le générateur de signal (199) est couplé à un élément de capteur (197) et à une unité de commutation, de sorte que l'élément de capteur (197), dans un état de service prédéterminé, commande l'unité de commutation (198) pour activer le générateur de signal (199), et que de préférence, l'unité de commutation (198) couplée au générateur de signal (199) est conçue pour être réinitialisée et/ou couplée à un réinitialisateur (202) pour réinitialiser l'unité de commutation (198).

11. Moyen d'éclairage selon l'une des revendications 1 à 10, **caractérisé en ce qu'**au moins un élément de capteur (177) est prévu, que lors d'une première connexion prédéterminée du moyen d'éclairage (170) avec la douille (172) de l'éclairage, il se produit une perte électrique, et lors d'une seconde connexion prédéterminé du moyen d'éclairage (170) avec la douille (172) de l'éclairage, il ne se produit aucune perte électrique ou qu'une perte électrique plus faible, et qu'un générateur de signal (181) est ainsi prévu qu'il est actif dans la première connexion prédéterminée ou la seconde connexion prédéterminée.

12. Moyen d'éclairage selon l'une des revendications 1 à 11, **caractérisé en ce que** le dispositif de protection (111, 185, 222, 222') est ainsi conçu que dans l'état de montage partiel, la tension de contact sur un contact électrique attribué au dispositif de protection (111, 185, 222, 222') est en-deçà d'une valeur de 50 volts (CA) et/ou 120 volts (CC), en particulier en-dessous de 25 volts (AC) et/ou 60 volts (CC), et/ou que le moyen d'éclairage (110, 160, 170, 170', 190, 210, 210') est tubulaire, de préférence pour échanger des tubes fluorescents, en particulier de type T4, T5, T8, T10 et T12 et/ou pour être reçu dans un socle de tube, en particulier de type G5 ou G13.

13. Système (100) comprenant un moyen d'éclairage (110, 160, 170, 170', 190, 210, 210') et une douille (101, 114, 161, 172, 196, 211), dans lequel le moyen d'éclairage (110, 160, 170, 170', 190, 210, 210') est conçu pour le fonctionnement dans la douille (101, 114, 161, 172, 196, 211) en correspondant à la douille (101, 114, 161, 172, 196, 211), **caractérisé en ce que** le moyen d'éclairage (110, 160, 170, 170', 190, 210, 210') est formé selon l'une des revendications 1 à 13 et que le dispositif de protection (111, 185, 222, 222'), lorsque le moyen d'éclairage (110, 160, 170, 170', 190, 210, 210') est dans l'état monté dans la douille (74, 101, 114, 161, 172, 196, 211), est désactivé de façon forcée et activé dans l'état démonté.

14. Système selon la revendication 13, **caractérisé en ce que** la douille (101, 114, 161, 172, 196, 211) de l'éclairage (102) est appropriée pour le fonctionnement avec des tubes fluorescents.
